(19) Europäisches Patentamt
European Patent Office
Office européen des brevets

(11) EP 4 342 917 A1

(12) EUROPEAN PATENT APPLICATION
published in accordance with Art. 153(4) EPC

(43) Date of publication:
27.03.2024 Bulletin 2024/13

(21) Application number: 22804696.7

(22) Date of filing: 17.05.2022

(51) International Patent Classification (IPC):
C08F 16/24 (2006.01) C08F 14/18 (2006.01)
C08F 16/30 (2006.01) C08F 216/14 (2006.01)
C09D 127/12 (2006.01) C09D 129/10 (2006.01)

(52) Cooperative Patent Classification (CPC):
C08F 14/18; C08F 16/24; C08F 16/30;
C08F 216/14; C09D 127/12; C09D 129/10;
Y02E 60/50

(86) International application number:
PCT/JP2022/020585

(87) International publication number:
WO 2022/244785 (24.11.2022 Gazette 2022/47)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 19.05.2021 JP 2021084881
11.06.2021 JP 2021097841
19.11.2021 JP 2021188916

(71) Applicant: DAIKIN INDUSTRIES, LTD.
Osaka-Shi, Osaka 530-0001 (JP)

(72) Inventors:
- HIGASHI, Masahiro
Osaka-shi, Osaka 530-0001 (JP)
- NAKANISHI, Kanako
Osaka-shi, Osaka 530-0001 (JP)
- ISHIHARA, Sumi
Osaka-shi, Osaka 530-0001 (JP)
- HOSOKAWA, Moe
Osaka-shi, Osaka 530-0001 (JP)
- YAMATO, Kensuke
Osaka-shi, Osaka 530-0001 (JP)
- KANEKO, Kazuki
Osaka-shi, Osaka 530-0001 (JP)
- KISHIKAWA, Yosuke
Osaka-shi, Osaka 530-0001 (JP)

(74) Representative: Hoffmann Eitle
Patent- und Rechtsanwälte PartmbB
Arabellastraße 30
81925 München (DE)

# (54) FLUOROPOLYMER, AQUEOUS SOLUTION, AND COATING COMPOSITION

(57) Provided is a fluoropolymer of a monomer (I) represented by the general formula (I), wherein a content of a polymerization unit (I) derived from the monomer (I) is 50% by mass or more based on all polymerization units constituting the fluoropolymer:

General formula (I): $CX_2=CX-O-Rf-SO_3M$

wherein X is independently F or $CF_3$; Rf is a fluorine-containing alkylene group having 1 to 40 carbon atoms or a fluorine-containing alkylene group having 2 to 100 carbon atoms and having an ether bond or a keto group; and M is -H, a metal atom, $-NR^7_4$, imidazolium optionally having a substituent, pyridinium optionally having a substituent, or phosphonium optionally having a substituent, wherein $R^7$ is H or an organic group.

EP 4 342 917 A1

## Description

TECHNICAL FIELD

The present disclosure relates to a fluoropolymer, an aqueous solution, and a coating composition.

BACKGROUND ART

Patent Document 1 discloses a copolymer composed of a polymerization unit derived from vinylidene fluoride and a polymerization unit having a side chain containing $-CF_2COOLi$ or $-CF_2SO_3Li$.

Patent Document 2 discloses a polymer substantially composed of the following repeating units:

(A)

$$-CF_2-CFL-$$

-(L=F, $CF_3$, or $R_FO$-, and $R_F$ is a C1-C5 perfluoroalkyl group)

(B)

$$-CF_2-CF[-O-(CF_2CFCF_3O)_K-(CF_2)_3-SO_3M]-$$

-(K=0 or 1, and M=H, metal, or an ammonium ion)

wherein the ratio of the numbers of the repeating units is (A)/(B)=1.5 to 14.

Patent Document 3 discloses a highly fluorinated sulfinic acid oligomer.

RELATED ART

PATENT DOCUMENTS

Patent Document 1: Japanese Patent Laid-Open No. 10-284128
Patent Document 2: Japanese Patent Laid-Open No. 57-92025
Patent Document 3: Japanese Translation of PCT International Application Publication No. 2014-504293

SUMMARY OF THE INVENTION

PROBLEM TO BE SOLVED BY THE INVENTION

An object of the present disclosure is to provide a fluoropolymer that enables a coating composition containing a high concentration of the fluoropolymer to be prepared, and that enables a coating film having a uniform film thickness to be formed using the coating composition even when the coating composition contains a high concentration of the fluoropolymer.

MEANS FOR SOLVING THE PROBLEM

The present disclosure provides a fluoropolymer of a monomer (I) represented by the general formula (I), wherein a content of a polymerization unit (I) derived from the monomer (I) is 50% by mass or more based on all polymerization units constituting the fluoropolymer:

General formula (I): $CX_2=CX-O-Rf-SO_3M$

wherein X is independently F or $CF_3$; Rf is a fluorine-containing alkylene group having 1 to 40 carbon atoms or a fluorine-containing alkylene group having 2 to 100 carbon atoms and having an ether bond or a keto group; and M is -H, a metal atom, $-NR^7_4$, imidazolium optionally having a substituent, pyridinium optionally having a substituent, or phosphonium optionally having a substituent, wherein $R^7$ is H or an organic group.

The fluoropolymer of the present disclosure preferably has a weight average molecular weight (Mw) of 0.6 ×

$10^4$ or more.

The fluoropolymer of the present disclosure preferably has a molecular weight distribution (Mw/Mn) of 3.0 or less.

In the general formula (I), each X is preferably F.

In the general formula (I), Rf is a fluorine-containing alkylene group having 1 to 5 carbon atoms or a fluorine-containing alkylene group having 2 to 5 carbon atoms and having an ether bond or a keto group.

The fluoropolymer of the present disclosure is preferably a copolymer of the monomer (I) and a monomer represented by the general formula $CFR=CR_2$, wherein R is independently H, F, or a perfluoroalkyl group having 1 to 4 carbon atoms.

When the fluoropolymer of the present disclosure is a copolymer, preferably the content of the polymerization unit (I) derived from the monomer (I) is 50 to 94% by mass based on all polymerization units constituting the fluoropolymer, and the content of a polymerization unit (M) derived from the monomer represented by the general formula $CFR=CR_2$, wherein R is independently H, F, or a perfluoroalkyl group having 1 to 4 carbon atoms, is 6 to 50% by mass based on all polymerization units constituting the fluoropolymer.

When the fluoropolymer of the present disclosure is a copolymer, the alternating ratio of the polymerization unit (I) and the polymerization unit (M) is preferably 40% or more.

In the fluoropolymer of the present disclosure, the content of the polymerization unit (I) is preferably 99% by mass or more based on all polymerization units constituting the fluoropolymer.

The fluoropolymer of the present disclosure preferably consists of the polymerization unit (I).

The fluoropolymer of the present disclosure is preferably substantially free of a dimer and a trimer of the monomer (I).

In the fluoropolymer of the present disclosure, the content of a fraction having a molecular weight of 3,000 or less is preferably 0.5% or less based on the fluoropolymer.

Also, the present disclosure provides an aqueous solution comprising the fluoropolymer.

In the aqueous solution of the present disclosure, the content of the fluoropolymer is preferably 2% by mass or more based on the aqueous solution.

Also, the present disclosure provides a coating composition comprising the fluoropolymer or the aqueous solution.

## EFFECTS OF INVENTION

The present disclosure can provide a fluoropolymer that enables a coating composition containing a high concentration of the fluoropolymer to be prepared, and that enables a coating film having a uniform film thickness to be formed using the coating composition even when the coating composition contains a high concentration of the fluoropolymer.

## DESCRIPTION OF EMBODIMENTS

Before describing the present disclosure in detail, some terms used in the present disclosure will now be defined or described.

The term "organic group" as used herein means a group containing one or more carbon atoms or a group formed by removing one hydrogen atom from an organic compound.

Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents, a cyano group,
a formyl group,

RaO-,

RaCO-,

$RaSO_2$-,

RaCOO-,

RaNRaCO-,

RaCONRa-,

RaOCO-,

$RaOSO_2$-,

and

$RaNRbSO_2$-,

wherein Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8, and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms, and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12, and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a

hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8, and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8, and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as an N-methylcarbamoyl group, an N,N-dimethylcarbamoyl group, and an N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total, and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, an N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8, and preferably 1 to 6 carbon atoms in total, such as a methoxy group, an ethoxy group, an i-propyloxy group, a cyclohexyloxy group, and a methoxyethoxy group.

The aromatic amino group and heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total, more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups

having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, an N,N-dimethylcarbamoylamino group, a phenylcarbamoylamino group, and a 4-pyridinecarbamoylamino group.

In the present disclosure, the range represented by endpoints includes all numerical values that fall within that range (for example, 1 to 10 includes 1.4, 1.9, 2.33, 5.75, 9.98, and the like).

In the present disclosure, the phrase "at least one" includes all numerical values of equal to or greater than 1 (e.g., at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

The fluoropolymer of the present disclosure is a polymer of a monomer (I) represented by the general formula (I):

General formula (I): $CX_2=CX-O-Rf-SO_3M$

wherein X is independently F or $CF_3$; Rf is a fluorine-containing alkylene group having 1 to 40 carbon atoms or a fluorine-containing alkylene group having 2 to 100 carbon atoms and having an ether bond or a keto group; and M is -H, a metal atom, $-NR^7_4$, imidazolium optionally having a substituent, pyridinium optionally having a substituent, or phosphonium optionally having a substituent, wherein $R^7$ is H or an organic group.

The fluoropolymer may be a homopolymer consisting of a polymerization unit (I) derived from the monomer (I), or may be a copolymer containing the polymerization unit (I) and a polymerization unit derived from a further monomer copolymerizable with the monomer (I). The polymerization unit (I) may be the same or different at each occurrence, and the fluoropolymer may contain polymerization units (I) derived from two or more different monomers represented by the general formula (I).

The fluoropolymer has a content of the polymerization unit (I) derived from the monomer (I) of 50% by mass or more based on all polymerization units constituting the fluoropolymer. The content of the polymerization unit (I) in the fluoropolymer is, in ascending order of preference, 60% by mass or more, 70% by mass or more, 80% by mass or more, 90% by mass or more, or 99% by mass or more based on all polymerization units constituting the fluoropolymer. The content of the polymerization unit (I) is, particularly preferably, substantially 100% by mass, and the fluoropolymer most preferably consists of the polymerization unit (I). A higher content of the polymerization unit (I) in the fluoropolymer is more advantageous for increased water-solubility of the fluoropolymer. Also, the fluoropolymer of the present disclosure contains a large amount of the polymerization unit (I), and thus the fluoropolymer of the present disclosure when used in a coating composition enables a coating composition containing a high concentration of the fluoropolymer to be prepared, and enables a coating film having a uniform film thickness to be formed using the coating composition even when the coating composition contains a high concentration of the fluoropolymer.

In the fluoropolymer, the content of the polymerization unit derived from the further monomer copolymerizable with the monomer (I) is, in ascending order of preference, 50% by mass or less, 40% by mass or less, 30% by mass or less, 20% by mass or less, 10% by mass or less, or 1% by mass or less based on all polymerization units constituting the fluoropolymer. The content of the polymerization unit derived from the further monomer copolymerizable with the monomer (I) is, particularly preferably, substantially 0% by mass, and most preferably the fluoropolymer does not contain the polymerization unit derived from the further monomer.

The lower limit of the number average molecular weight of the fluoropolymer is, in ascending order of preference, $0.3 \times 10^4$ or more, $0.4 \times 10^4$ or more, $0.5 \times 10^4$ or more, $0.7 \times 10^4$ or more, $0.8 \times 10^4$ or more, $1.0 \times 10^4$ or more, $1.2 \times 10^4$ or more, $1.4 \times 10^4$ or more, $1.6 \times 10^4$ or more, $1.8 \times 10^4$ or more, $2.0 \times 10^4$ or more, or $3.0 \times 10^4$ or more. The upper limit of the number average molecular weight of the fluoropolymer is, in ascending order of preference, $75.0 \times 10^4$ or less, $50.0 \times 10^4$ or less, $40.0 \times 10^4$ or less, $30.0 \times 10^4$or less, or $20.0 \times 10^4$ or less.

The lower limit of the weight average molecular weight of the fluoropolymer is, in ascending order of preference, $0.4 \times 10^4$ or more, $0.5 \times 10^4$ or more, $0.6 \times 10^4$ or more, $0.8 \times 10^4$ or more, $1.0 \times 10^4$ or more, $1.2 \times 10^4$ or more, $1.4 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, $4.3 \times 10^4$ or more, $4.7 \times 10^4$ or more, $5.1 \times 10^4$ or more, $10.0 \times 10^4$ or more, $15.0 \times 10^4$ or more, $20.0 \times 10^4$ or more, or $25.0 \times 10^4$ or more. The upper limit of the weight average molecular weight of the fluoropolymer is, in ascending order of preference, $150.0 \times 10^4$ or less, $100.0 \times 10^4$ or less, $60.0 \times 10^4$ or less, $50.0 \times 10^4$ or less, or $40.0 \times 10^4$ or less.

The molecular weight distribution (Mw/Mn) of the fluoropolymer is, in ascending order of preference, 3.0 or less, 2.7 or less, 2.4 or less, 2.2 or less, 2.0 or less, 1.9 or less, 1.7 or less, 1.5 or less, 1.4 or less, or 1.3 or less.

The number average molecular weight and the weight average molecular weight are molecular weight values calculated by gel permeation chromatography (GPC) using monodisperse polyethylene oxide (PEO) and polyethylene

glycol (PEG) as standards. When measurement by GPC is not possible, the number average molecular weight of the fluoropolymer can be determined by the correlation between the number average molecular weight calculated from the number of terminal groups obtained by NMR, FT-IR, or the like, and the melt flow rate. The melt flow rate can be measured in accordance with JIS K 7210.

The acid value of the fluoropolymer is preferably 60 or more, more preferably 90 or more, even more preferably 120 or more, particularly preferably 150 or more, and most preferably 180 or more. The upper limit is not limited, and is preferably 300 or less.

When the fluoropolymer has $-SO_3M$ other than $-SO_3H$, i.e., $-SO_3M$ wherein M is a metal atom, $-NR^7_4$, imidazolium optionally having a substituent, pyridinium optionally having a substituent, or phosphonium optionally having a substituent, the acid value of the fluoropolymer can be measured by converting $-SO_3M$ to - $SO_3H$ and then performing acid-base titration of $-SO_3H$.

The monomer (I) is represented by the general formula (I) :

General formula (I): $CX_2=CX-O-Rf-SO_3M$

wherein X is independently F or $CF_3$. At least one X is preferably F, and more preferably all X are F.

In the formula, Rf is a fluorine-containing alkylene group having 1 to 40 carbon atoms, a fluorine-containing alkylene group having 2 to 100 carbon atoms and an ether bond, or a fluorine-containing alkylene group having 2 to 100 carbon atoms and a keto group. The fluorine-containing alkylene group having 2 to 100 carbon atoms and having an ether bond is an alkylene group which does not include a structure in which an oxygen atom is an end and contains an ether bond between carbon atoms.

The fluorine-containing alkylene group preferably has 2 or more carbon atoms. Further, the number of carbon atoms of the fluorine-containing alkylene group is preferably 30 or less, more preferably 20 or less, even more preferably 10 or less, and particularly preferably 5 or less. Examples of the fluorine-containing alkylene group include $-CF_2-$, $-CH_2CF_2-$, $-CF_2CF_2-$, - $CF_2CH_2-$, $-CF_2CF_2CH_2-$, $-CF(CF_3)-$, $-CF(CF_3)CF_2-$, $-CF(CF_3)CH_2-$, - $CF_2CF_2CF_2-$, and $-CF_2CF_2CF_2CF_2-$. The fluorine-containing alkylene group is preferably a perfluoroalkylene group, and preferably an unbranched linear perfluoroalkylene group.

The fluorine-containing alkylene group having an ether bond preferably has 3 or more carbon atoms. The fluorine-containing alkylene group having an ether bond preferably has 60 or less carbon atoms, more preferably 30 or less carbon atoms, still more preferably 12 or less carbon atoms, and particularly preferably 5 or less carbon atoms. The fluorine-containing alkylene group having an ether bond is also preferably a divalent group represented by, for example, the general formula:

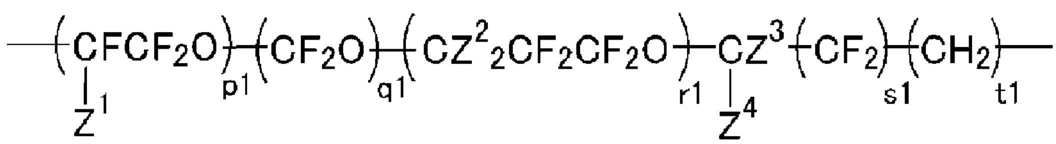

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF_2CF(CF_3)OCF_2-$, - $CF_2CF(CF_3)OCF_2CF_2-$, $-CF_2CF(CF_3)OCF_2CF_2CF_2-$, $-CF(CF_3)CF_2-O-CF(CF_3)-$, $-(CF(CF_3)CF_2-O)_n-CF(CF_3)-$ (wherein n is an integer of 1 to 10), - $CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

The fluorine-containing alkylene group having a keto group preferably has 3 or more carbon atoms. The fluorine-containing alkylene group having a keto group preferably has 60 or less carbon atoms, more preferably 30 or less carbon atoms, still more preferably 12 or less carbon atoms, and particularly preferably 5 or less carbon atoms.

Examples of the fluorine-containing alkylene group having a keto group include $-CF_2CF(CF_3)CO-CF_2-$, $-CF_2CF(CF_3)CO-CF_2CF_2-$, $-CF_2CF(CF_3)CO-CF_2CF_2CF_2-$, and $-CF_2CF(CF_3)CO-CF_2CF_2CF_2CF_2-$. The fluorine-containing alkylene group having a keto group is preferably a perfluoroalkylene group.

Water may be added to the keto group in the fluorine-containing alkylene group. Accordingly, the monomer (I) may be a hydrate. Examples of the fluorine-containing alkylene group in which water is added to the keto group include - $CF_2CF(CF_3)C(OH)_2-CF_2-$, $-CF_2CF(CF_3)C(OH)_2-CF_2CF_2-$, $-CF_2CF(CF_3)C(OH)_2-CF_2CF_2CF_2-$, and $-CF_2CF(CF_3)C(OH)_2-CF_2CF_2CF_2CF_2-$.

M at each occurrence may be the same or different and is -H, a metal atom, $NR^7_4$, imidazolium optionally

having a substituent, pyridinium optionally having a substituent, or phosphonium optionally having a substituent, wherein $R^7$ is H or an organic group.

$R^7$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and preferable is Na, K, or Li.

M at each occurrence may be the same or different and is preferably H, a metal atom, or $NR^7_4$, more preferably H, an alkali metal (Group 1), an alkaline earth metal (Group 2), or $NR^7_4$, even more preferably H, Na, K, Li, or $NH_4$, yet more preferably H, Na, K, or $NH_4$, and most preferably H, Na, or $NH_4$.

The monomer (I) is preferably at least one selected from the group consisting of monomers represented by the following general formulae (1a), (1b), (1c), (1d), and (1e) because the water-solubility of the fluoropolymer is further improved:

$CF_2=CF-O-(CF_2)_{n1}-SO_3M$ (1a)

wherein n1 represents an integer of 1 to 10, and M is as defined above;

$CF_2=CF-O-(CF_2C(CF_3)F)_{n2}-SO_3M$ (1b)

wherein n2 represents an integer of 1 to 5, and M is as defined above;

$CF_2=CF-O-(CFX^1)_{n3}-SO_3M$ (1c)

wherein $X^1$ represents F or $CF_3$, n3 represents an integer of 1 to 10, and M is as defined above;

$CF_2=CF-O-(CF_2CFX^1O)_{n4}-(CF_2)_{n6}-SO_3M$ (1d)

wherein n4 represents an integer of 1 to 10, n6 represents an integer of 1 to 3, and M and $X^1$ are as defined above; and

$CF_2=CF-O-(CF_2CF_2CFX^1O)_{n5}-CF_2CF_2CF_2-SO_3M$ (1e)

wherein n5 represents an integer of 0 to 10, and M and $X^1$ are as defined above.

In the general formula (1a), n1 is preferably an integer of 5 or less, more preferably an integer of 3 or less, and even more preferably an integer of 2 or less. M is preferably H, Na, K, or $NH_4$.

Examples of the monomer represented by the formula (1a) include $CF_2=CFOCF_2CF_2SO_3M$, $CF_2=CFOCF_2SO_3M$, $CF_2=CFOCF_2CF_2CF_2SO_3M$, and $CF_2=CFOCF_2CF_2CF_2CF_2SO_3M$, wherein M is as defined above.

In the general formula (1b), n2 is preferably an integer of 3 or less. M is preferably H, Na, K, or $NH_4$.

In the general formula (1c), n3 is preferably an integer of 5 or less, and M is preferably H, Na, K, or $NH_4$.

In the general formula (1d), $X^1$ is preferably $CF_3$, n4 is preferably an integer of 5 or less, and M is preferably H, Na, K, or $NH_4$.

Examples of the monomer represented by the general formula (1d) include $CF_2=CFOCF_2CF(CF_3)OCF_2SO_3M$, $CF_2=CFOCF_2CF(CF_3)OCF_2CF_2SO_3M$, and $CF_2=CFOCF_2CF(CF_3)OCF_2CF_2CF_2SO_3M$, wherein M is as defined above.

In the general formula (1e), n5 is preferably an integer of 5 or less, and M is preferably H, Na, K, or $NH_4$.

An example of the monomer represented by the general formula (1e) is $CF_2=CFOCF_2CF_2CF_2SO_3M$, wherein M represents H, $NH_4$, or an alkali metal.

The further monomer copolymerizable with the monomer (I) includes monomers represented by the following general formula:

General formula: $CX_2=CX-O-Rf-COOM$

wherein X, Rf, and M are as defined in the general formula (I).

The further monomer copolymerizable with the monomer (I) is preferably a monomer represented by the general formula $CFR=CR_2$, wherein R is independently H, F, or a perfluoroalkyl group having 1 to 4 carbon atoms. Also, the further monomer copolymerizable with the monomer (I) is preferably a fluorine-containing ethylenic monomer having 2 or 3 carbon atoms. Examples of the further monomer copolymerizable with the monomer (I) include $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E-form), and $CHF=CHCF_3$ (Z-form) .

Among these, from the viewpoint of good copolymerizability, the further monomer is preferably at least one

selected from the group consisting of tetrafluoroethylene ($CF_2$=$CF_2$), chlorotrifluoroethylene ($CF_2$=CFCl), and vinylidene fluoride ($CH_2$=$CF_2$), more preferably at least one selected from the group consisting of tetrafluoroethylene and vinylidene fluoride, and even more preferably vinylidene fluoride. Accordingly, the polymerization unit derived from the further monomer is preferably at least one selected from the group consisting of a polymerization unit derived from tetrafluoroethylene and a polymerization unit derived from vinylidene fluoride, and more preferably a polymerization unit derived from vinylidene fluoride. The polymerization unit derived from the further monomer may be the same or different at each occurrence, and the fluoropolymer may contain polymerization units derived from two or more different further monomers.

When the fluoropolymer contains the polymerization unit (I) and a polymerization unit derived from the further monomer copolymerizable with the monomer (I), the content of the polymerization unit (I) derived from the monomer (I) is preferably 50 to 94% by mass, more preferably 63 to 90% by mass, and even more preferably 67 to 87% by mass based on all polymerization units constituting the fluoropolymer, and the content of the polymerization unit derived from the further monomer is preferably 6 to 50% by mass, more preferably 10 to 37% by mass, and even more preferably 13 to 33% by mass based on all polymerization units constituting the fluoropolymer. Such a configuration is particularly suitable when the polymerization unit derived from the further monomer copolymerizable with the monomer (I) is a polymerization unit (M) derived from a monomer represented by the general formula CFR=$CR_2$. When the fluoropolymer contains the polymerization unit (I) and the polymerization unit (M), the total content of the polymerization unit (I) and the polymerization unit (M) is preferably 80 to 100% by mass, more preferably 85% by mass or more, even more preferably 90% by mass or more, and particularly preferably 99% by mass or more based on all polymerization units constituting the fluoropolymer. When the fluoropolymer contains the polymerization unit (I) and a polymerization unit (M1) derived from a monomer represented by $CX_2$=CX-O-Rf-COOM, the total content of the polymerization unit (I) and the polymerization unit (M1) is preferably 80 to 100% by mass, more preferably 85% by mass or more, even more preferably 90% by mass or more, and particularly preferably 99% by mass or more based on all polymerization units constituting the fluoropolymer.

When the fluoropolymer contains the polymerization unit (I) and a polymerization unit derived from the further monomer copolymerizable with the monomer (I), the alternating ratio of the polymerization unit (I) and the polymerization unit derived from the further monomer copolymerizable with the monomer (I) is preferably 40% or more, more preferably 50% or more, even more preferably 60% or more, yet more preferably 70% or more, particularly preferably 80% or more, and most preferably 90% or more. The alternating ratio may be, for example, 40 to 99%. Such a configuration is particularly suitable when the polymerization unit derived from the further monomer copolymerizable with the monomer (I) is a polymerization unit (M) derived from a monomer represented by the general formula CFR=$CR_2$.

The alternating ratio of the polymerization unit (I) and the polymerization unit derived from the further monomer copolymerizable with the monomer (I) in the fluoropolymer can be determined by $^{19}F$-NMR analysis of the fluoropolymer.

Examples of the further monomer also include monomers represented by the general formula (n1-2):

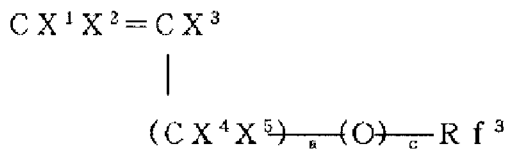

(n1-2)

wherein $X^1$ and $X^2$ are the same or different and H or F; $X^3$ is H, F, Cl, $CH_3$, or $CF_3$; $X^4$ and $X^5$ are the same or different and H or F; a and c are the same or different and 0 or 1; and $Rf^3$ is a fluorine-containing alkyl group having 1 to 40 carbon atoms or a fluorine-containing alkyl group having 2 to 100 carbon atoms and having an ether bond.

Specifically, preferable examples include $CH_2$=$CFCF_2$-O-Rf3, $CF_2$=CF-O-$Rf^3$, $CF_2$=$CFCF_2$-O-$Rf^3$, $CF_2$=CF-$Rf^3$, $CH_2$=CH-$Rf^3$, and $CH_2$=CH-O-$Rf^3$ (wherein $Rf^3$ is as in the above formula (n1-2)).

Examples of the further monomer also include fluorine-containing acrylate monomers represented by the formula (n2-1):

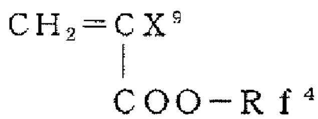

(n2-1)

wherein $X^9$ is H, F, or $CH_3$; and $Rf^4$ is a fluorine-containing alkyl group having 1 to 40 carbon atoms or a fluorine-containing alkyl group having 2 to 100 carbon atoms and having an ether bond. Examples of the $Rf^4$ group include:

$$-(CH_2)_{d1}-(CF_2)_{e1}-Z^8$$

wherein $Z^8$ is H, F, or Cl; dl is an integer of 1 to 4; and e1 is an integer of 1 to 10,

$-CH(CF_3)_2$,

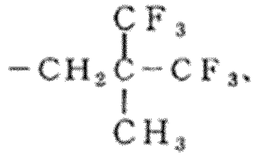

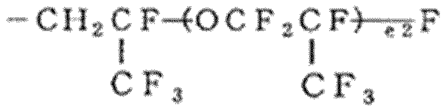

wherein e2 is an integer of 1 to 5,

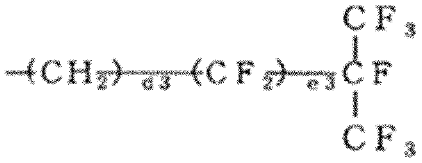

wherein d3 is an integer of 1 to 4; and e3 is an integer of 1 to 10.

Examples of the further monomer also include fluorine-containing vinyl ether represented by the formula (n2-2):

$CH_2=CHO-Rf^5$ (n2-2)

wherein $Rf^5$ is a fluorine-containing alkyl group having 1 to 40 carbon atoms or a fluorine-containing alkyl group having 2 to 100 carbon atoms and having an ether bond.

Specifically, preferable examples of the monomer represented by the general formula (n2-2) include:

$$CH_2=CHOCH_2-(CF_2)_{e4}-Z^9$$

wherein $Z^9$ is H or F; and e4 is an integer of 1 to 10,

$$CH_2=CHOCH_2CH_2-(CF_2)_{e5}-F$$

wherein e5 is an integer of 1 to 10,

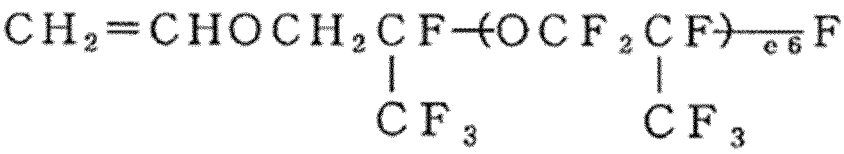

wherein e6 is an integer of 1 to 10.

More specific examples include:

$CH_2=CHOCH_2CF_2CF_2H$,

$$CH_2=CHOCH_2\text{-}(CF_2CF_2)_2\text{-}H$$、

$$CH_2=CHOCH_2\text{-}(CF_2CF_2)_3\text{-}H$$、

$CH_2=CHOCH_2CF_2CF_3$,

$CH_2=CHOCH_2CF_3$,

$$CH_2=CHOCH_2CH_2\text{-}(CF_2CF_2)_4\text{-}F$$、

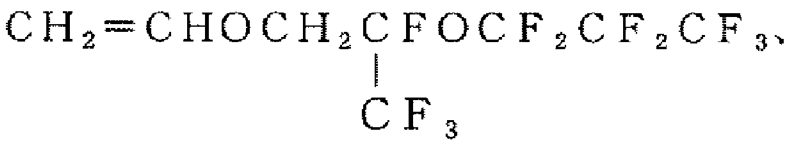

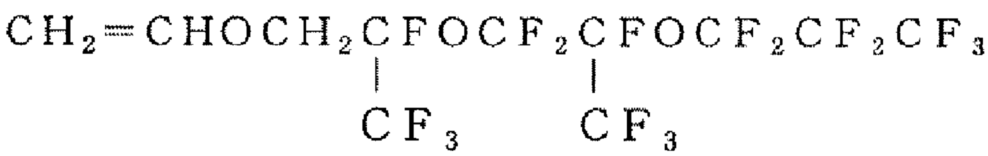

and the like.

In addition, examples also include fluorine-containing allyl ether represented by the general formula (n2-3):

$CH_2=CHCH_2O\text{-}Rf^6$ (n2-3)

wherein $Rf^6$ is a fluorine-containing alkyl group having 1 to 40 carbon atoms or a fluorine-containing alkyl group having 2 to 100 carbon atoms and having an ether bond; and fluorine-containing vinyl monomers represented by the general formula (n2-4) :

$CH_2=CH\text{-}Rf^7$ (n2-4)

wherein $Rf^7$ is a fluorine-containing alkyl group having 1 to 40 carbon atoms or a fluorine-containing alkyl group having 2 to 100 carbon atoms and having an ether bond.

Specific examples of monomers represented by general formulae (n2-3) and (n2-4) include monomers such as:

$CH_2=CHCH_2OCH_2CF_2CF_2H$,

$$CH_2=CHCH_2OCH_2\text{-}(CF_2CF_2)_2\text{-}H$$、

$$CH_2=CHCH_2OCH_2\text{-}(CF_2CF_2)_3\text{-}H$$、

$CH_2=CHCH_2OCH_2CF_2CF_3$,

$CH_2=CHCH_2OCH_2CF_3$,

$$CH_2=CHCH_2OCH_2CH_2-(CF_2CF_2)_4-F,$$

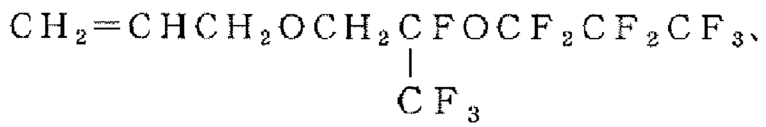

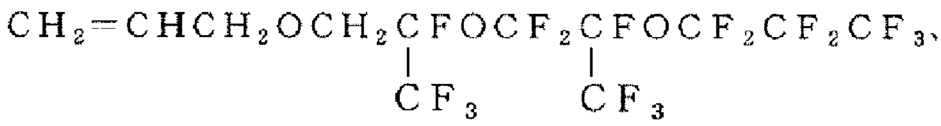

$$CH_2=CH-(CF_2CF_2)_2-F,$$

$$CH_2=CH-(CF_2CF_2)_4-F$$

and the like.

The fluoropolymer usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the fluoropolymer or produced during a chain transfer reaction.

The fluoropolymer preferably has an ion exchange rate (IXR) of 53 or less. The IXR is defined as the number of carbon atoms in the polymer main chain based on the ionic group. A precursor group that becomes ionic by hydrolysis (such as $-SO_2F$) is not regarded as an ionic group for the purpose of determining the IXR.

The IXR is preferably 0.5 or more, more preferably 1 or more, even more preferably 3 or more, yet more preferably 4 or more, further preferably 5 or more, and particularly preferably 8 or more. Also, the IXR is more preferably 43 or less, even more preferably 33 or less, and particularly preferably 23 or less.

The ion exchange capacity of the fluoropolymer is, in ascending order of preference, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.20 meq/g or more. The ion exchange capacity is the content of ionic groups (anionic groups) in the fluoropolymer and can be calculated from the formulation of the fluoropolymer.

In the fluoropolymer, the ionic groups (anionic groups) are typically distributed along the polymer main chain. The fluoropolymer contains the polymer main chain together with a repeating side chain bonded to this main chain, and this side chain preferably has an ionic group.

The fluoropolymer preferably has water-solubility. Water-solubility means the property of being readily dissolved or dispersed in an aqueous medium. The particle size of a water-soluble fluoropolymer cannot be measured by, for example, dynamic light scattering (DLS), or a particle size of 10 nm or less is indicated.

The fluoropolymer preferably has sufficient water-solubility. Generally, the higher the content of the fluoropolymer in an aqueous solution is, the more difficult it is to sufficiently dissolve or disperse the fluoropolymer in an aqueous medium. Accordingly, it can be said that the fluoropolymer, the particle size of which cannot be measured by dynamic light scattering (DLS), is highly water-soluble even when the content of the fluoropolymer in an aqueous solution is high. Preferably, the particle size cannot be measured even when the fluoropolymer is contained in an aqueous solution in a content of 1.0% by mass. More preferably, the particle size cannot be measured even when the fluoropolymer is contained in an aqueous solution in a content of 1.5% by mass and even more preferably 2.0% by mass.

The viscosity of the aqueous solution of the fluoropolymer is preferably 5.0 mPa.s or more, more preferably 8.0 mPa.s or more, even more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and further preferably 20.0 mPa.s or less.

The viscosity of the aqueous solution of the fluoropolymer can be determined by regulating the content of the fluoropolymer in the aqueous solution to be 33% by mass based on the aqueous solution, and measuring the viscosity of the resulting aqueous solution at 20°C using a tuning fork vibration viscometer (model number: SV-10) manufactured by A&D Company Limited.

The critical micelle concentration (CMC) of the fluoropolymer is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the fluoropolymer can be determined by measuring surface tension. Surface tension can be measured with, for example, a surface tensiometer CBVP-A3 manufactured by Kyowa Interface Science Co., Ltd.

The aqueous solution containing the fluoropolymer and the aqueous medium can be used in various applications. The content of the fluoropolymer in the aqueous solution is, based on the aqueous solution, preferably 0.1% by mass or more, more preferably 1.0% by mass or more, even more preferably 1.5% by mass or more, particularly preferably 2.0% by mass or more, further preferably 5.0% by mass or more, and most preferably 10% by mass or more, and is preferably 50% by mass or less and more preferably 40% by mass or less.

The fluoropolymer or the fluoropolymer-containing aqueous solution may be substantially free of a dimer and a trimer of the monomer (I). The dimer and the trimer of the monomer (I) are usually produced when polymerizing the monomer (I) to give the fluoropolymer. The content of the dimer and the trimer in the fluoropolymer is 1.0% by mass or less, preferably 0.1% by mass or less, more preferably 0.01% by mass or less, even more preferably 0.001% by mass or less, and particularly preferably 0.0001% by mass or less based on the fluoropolymer.

The fluoropolymer or the aqueous solution containing the fluoropolymer may be substantially free of the dimer and the trimer composed of the polymerization unit (I) derived from the monomer (I) and the polymerization unit derived from the further monomer copolymerizable with the monomer (I). The dimer and the trimer composed of the polymerization unit (I) and the polymerization unit derived from the further monomer are usually produced when the monomer (I) and the further monomer copolymerizable with the monomer (I) are polymerized to give a fluoropolymer. The content of the dimer and the trimer composed of the polymerization unit (I) and the polymerization unit derived from the further monomer in the fluoropolymer is 1.0% by mass or less, preferably 0.1% by mass or less, more preferably 0.01% by mass or less, even more preferably 0.001% by mass or less, and particularly preferably 0.0001% by mass or less based on the fluoropolymer. The further monomer copolymerizable with the monomer (I) is as described above, and is, for example, a monomer represented by the general formula $CFR=CR_2$, wherein R is independently H, F, or a perfluoroalkyl group having 1 to 4 carbon atoms.

The content of the dimer and the trimer in the fluoropolymer can be determined by performing a gel permeation chromatography (GPC) analysis on the fluoropolymer and calculating the total proportion of the peak areas (area percentages) of the dimer and the trimer to the total area of all peaks of the chromatogram obtained by the GPC analysis.

When the content of the dimer and the trimer in the fluoropolymer is less than 0.5% by mass based on the fluoropolymer, the content can be determined by liquid chromatography-mass spectrometry (LC/MS) measurement.

Specifically, aqueous solutions having five or more content levels of the monomer (I) are prepared, the LC/MS analysis is performed with respect to each content, the relationship between a content and an area based on that content (the integral value of the peak) is plotted, and a calibration curve of the monomer (I) is created. Moreover, calibration curves of the dimer and the trimer of the monomer (I) are created from the calibration curve of the monomer (I).

Methanol is added to the fluoropolymer to prepare a mixture, the mixture is filtered using an ultrafiltration disc (a molecular weight cut-off of 3,000 Da), and the resulting recovered solution is subjected to LC/MS analysis.

Then, using the calibration curves, the chromatographic area (the integral value of peaks) of the dimer and the trimer of the monomer (I) can be converted to the content of the dimer and the trimer.

The content of the fraction having a molecular weight of 3,000 or less in the fluoropolymer or the fluoropolymer-containing aqueous solution may be 3.7% or less, and is preferably 3.2% or less, more preferably 2.7% or less, even more preferably 1.7% or less, further preferably 1.2% or less, particularly preferably 1.0% or less, and most preferably 0.5% or less based on the fluoropolymer. The lower limit of the content of the fraction having a molecular weight of 3,000 or less is not limited, and is, for example, 0.01%. The content of the fraction having a molecular weight of 3,000 or less can be calculated from the peak area of GPC. The fraction having a molecular weight of 3,000 or less includes all compounds having a molecular weight of 3,000 or less.

The content of the fraction having a molecular weight of 2,000 or less in the fluoropolymer or the fluoropolymer-containing aqueous solution may be 3.2% or less, and is preferably 2.7% or less, more preferably 2.2% or less, even more preferably 1.7% or less, further preferably 1.2% or less, and particularly preferably 0.6% or less based on the fluoropolymer. The lower limit of the content of the fraction having a molecular weight of 2,000 or less is not limited, and is, for example, 0.01%. The content of the fraction having a molecular weight of 2,000 or less can be calculated from the peak area of GPC. The fraction having a molecular weight of 2,000 or less includes all compounds having a molecular weight of 2,000 or less.

The content of the fraction having a molecular weight of 1,500 or less in the fluoropolymer or the fluoropolymer-containing aqueous solution may be 2.7% or less, and is preferably 2.2% or less, more preferably 1.7% or less, even more preferably 1.2% or less, and further preferably 0.6% or less based on the fluoropolymer. The lower limit of the content of the fraction having a molecular weight of 1,500 or less is not limited, and is, for example, 0.01%. The content of the fraction having a molecular weight of 1,500 or less can be calculated from the peak area of GPC. The fraction

having a molecular weight of 1,500 or less includes all compounds having a molecular weight of 1,500 or less.

The content of the fraction having a molecular weight of 1,000 or less in the fluoropolymer or the fluoropolymer-containing aqueous solution may be 2.2% or less, and is preferably 1.7% or less, more preferably 1.2% or less, and even more preferably 0.6% or less based on the fluoropolymer. The lower limit of the content of the fraction having a molecular weight of 1,000 or less is not limited, and is, for example, 0.01%. The content of the fraction having a molecular weight of 1,000 or less can be calculated from the peak area of GPC. The fraction having a molecular weight of 1,000 or less includes all compounds having a molecular weight of 1,000 or less.

The fluoropolymer or the fluoropolymer-containing aqueous solution is, preferably, substantially free of a fluorine-containing surfactant. Herein, the phrase "substantially free of a fluorine-containing surfactant" means that the content of the fluorine-containing surfactant in the fluoropolymer or in the aqueous solution is 10 ppm by mass or less, preferably 1 ppm by mass or less, more preferably 100 ppb by mass or less, even more preferably 10 ppb by mass or less, yet more preferably 1 ppb by mass or less, and particularly preferably less than the detection limit of measurement by liquid chromatography-mass spectrometry (LC/MS).

The content of the fluorine-containing surfactant can be determined by a known method. For example, it can be quantified by LC/MS analysis.

First, methanol is added to the fluoropolymer or the aqueous solution, extraction is performed, and the resulting extract is subjected to LC/MS analysis. To further increase extraction efficiency, treatment by Soxhlet extraction, ultrasonic treatment, or the like may be performed.

From the resulting LC/MS spectrum, molecular weight information is extracted, and a match with the structural formula of a candidate fluorine-containing surfactant is checked.

Thereafter, aqueous solutions having five or more different content levels of the confirmed fluorine-containing surfactant are prepared, and LC/MS analysis of the aqueous solution of each content is performed, and the relationship between the content and the area for the content is plotted, and a calibration curve is drawn.

Then, using the calibration curve, the area of the LC/MS chromatogram of the fluorine-containing surfactant in the extract can be converted into the content of the fluorine-containing surfactant.

The fluorine-containing surfactant will be described below in the description concerning the polymerization of the monomer (I).

The fluoropolymer or the fluoropolymer-containing aqueous solution can be used in various applications. The fluoropolymer or the fluoropolymer-containing aqueous solution can be suitably used as, for example, a component of a coating composition.

The coating composition is preferably a composition comprising the fluoropolymer and at least one solvent selected from the group consisting of water and alcohol. The use of such a coating composition enables a coating film exhibiting an excellent antireflection effect to be formed. By using a coating composition that contains a fluoropolymer containing a large amount of the polymerization unit (I), a uniform coating film having a desired film thickness can be readily formed, also the antireflection effect and the hydrophilicity of the resulting coating film can be increased, and a sufficient developer dissolution rate can be obtained. Also, a higher content of the polymerization unit (I) in the fluoropolymer is preferable because the coating film can be provided with a lower refractive index and better developer solubility.

The solvent contained in the coating composition is at least one selected from the group consisting of water and alcohol. The alcohol is preferably a lower alcohol having 1 to 6 carbon atoms, and more preferably at least one selected from the group consisting of methanol, ethanol, isopropanol, n-propanol, and butyl alcohol.

The coating composition may further contain a water-soluble organic solvent (excluding alcohol), at least one basic substance selected from ammonia and organic amine, a surfactant, acid, a water-soluble polymer, a photoacid generator, an antifoaming agent, a light absorber, a storage stabilizer, a preservative, an adhesion aid, dye, and the like.

The content of the fluoropolymer in the coating composition is preferably 0.1 to 50% by mass, more preferably 0.5 to 30% by mass, even more preferably 1 to 20% by mass, and particularly preferably 2 to 10% by mass based on the coating composition.

A coating film can be produced by applying the coating composition to a substrate. The method for applying the coating composition is not limited, and includes roll coating, casting, dipping, spin coating, water casting, die coating, Langmuir-Blodgett technique, and the like.

Examples of the substrate to which the coating composition is applied include silicon wafers and quartz glass.

In particular, when precise control of the film thickness is required, application by spin coating is suitable. When spin coating is used, the film thickness of the coating film is determined by the number of rotations of the substrate, the rotation time, the viscosity of the coating composition, and the like. Due to the characteristics of an apparatus (a spin coater), an excessively low rotational speed or an excessively short rotation time likely results in variations in film thickness, and thus coating is generally performed at a high rotational speed for a certain period of time.

However, when the coating composition is applied at a high rotational speed for a certain amount of time, the resulting film thickness is small. Accordingly, it is not easy to produce a relatively thick film by using spin coating while suppressing

variations in film thickness. Since the coating composition of the present disclosure contains the fluoropolymer containing a large amount of the polymer unit (I) and, in addition, a coating film having a uniform film thickness can be formed using the coating composition even when a high concentration of the fluoropolymer is contained, the coating composition of the present disclosure is capable of imparting excellent effects such as hydrophilicity to the coating film and, at the same time, readily producing a relatively thick film while suppressing variations in film thickness.

The coating film obtained from the coating composition is suitable as, for example, a pellicle and an antireflection film. For example, applying the coating composition to a photoresist layer enables a photoresist laminate having a photoresist layer and an antireflection film to be prepared.

The fluoropolymer of the present disclosure can be produced by a production method comprising polymerizing the monomer (I) to produce the fluoropolymer of the monomer (I).

The oxygen concentration in the reaction system of the polymerization is preferably 1,500 volume ppm or less, more preferably 500 volume ppm or less, even more preferably 100 volume ppm or less, and particularly preferably 50 volume ppm or less because a fluoropolymer having a higher molecular weight can be readily produced. The oxygen concentration in the reaction system is usually 0.01 volume ppm or more. In the production method of the present disclosure, the oxygen concentration in the reaction system is preferably maintained within the above range throughout the polymerization of the monomer (I).

The oxygen concentration in the reaction system of polymerization can be controlled by causing, for example, an inert gas such as nitrogen or argon, or the gaseous monomer when a gaseous monomer is used, to flow through the liquid phase or the gas phase in the reactor. The oxygen concentration in the reaction system of polymerization can be determined by measuring and analyzing the gas emitted from the discharge gas line of the polymerization system with a low-concentration oxygen analyzer.

The polymerization temperature of the monomer (I) is preferably 80°C or lower, preferably 70°C or lower, more preferably 65°C or lower, even more preferably 60°C or lower, yet more preferably 55°C or lower, further preferably 50°C or lower, particularly preferably 45°C or lower, and most preferably 40°C or lower, and is preferably 10°C or higher, more preferably 15°C or higher, and even more preferably 20°C or higher because a fluoropolymer having a higher molecular weight can be readily produced.

In the production method, the monomer (I) may be copolymerized with the above-described further monomer.

In the production method, polymerization may be performed in the presence of a pH adjuster. The pH adjuster may be added before the beginning of polymerization or after the beginning of polymerization.

Examples of the pH adjuster used include ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, and ammonium gluconate. The pH can be measured with a pH meter manufactured by Orion.

The polymerization pressure is usually atmospheric pressure to 10 MPaG. The polymerization pressure is suitably determined in accordance with the types of the monomers used, the molecular weight of the target fluoropolymer, and the reaction rate.

The polymerization time is usually 1 to 200 hours, and may be 5 to 100 hours.

In the production method, the polymerization of the monomer (I) may be performed in an aqueous medium, or may be performed in the absence of an aqueous medium. Also, the polymerization of the monomer (I) may be performed in the absence of an aqueous medium and in the presence of a nonaqueous medium (for example, an organic solvent such as toluene) in an amount of less than 10% by mass based on the amount of the monomer containing the monomer (I). The polymerization of the monomer (I) may be emulsion polymerization, suspension polymerization, or bulk polymerization.

The aqueous medium is a reaction medium in which polymerization is performed, and means a water-containing liquid. The aqueous medium may be any medium containing water, and it may be a medium containing water and, for example, any of fluorine-free organic solvents such as alcohols, ethers, and ketones, and/or fluorine-containing organic solvents having a boiling point of 40°C or lower. The aqueous medium is preferably water.

In the production method, the monomer (I) can be polymerized in the presence of a polymerization initiator. The polymerization initiator is not limited as long as it can generate radicals within the polymerization temperature range, and known oil-soluble and/or water-soluble polymerization initiators can be used. The polymerization initiator can be combined with a reducing agent or the like to form a redox agent and initiate the polymerization. The concentration of the polymerization initiator is suitably determined according to the type of monomer, the molecular weight of the target fluoropolymer, and the reaction rate. When the monomer (I) is polymerized in an aqueous medium, a water-soluble polymerization initiator such as persulfate is preferably used. When the monomer (I) is polymerized in the absence of an aqueous medium, an oil-soluble polymerization initiator such as a peroxide is preferably used.

As a polymerization initiator, one of persulfates (such as ammonium persulfate) and organic peroxides such as disuccinic acid peroxide and diglutaric acid peroxide can be used singly, or these polymerization initiators can be

used in the form of a mixture. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfite during polymerization.

The polymerization initiator is, among others, preferably a persulfate because a fluoropolymer having a higher molecular weight can be readily produced. Examples of persulfates include ammonium persulfate, potassium persulfate, and sodium persulfate, and ammonium persulfate is preferable.

The polymerization initiator may be an oil-soluble radical polymerization initiator. The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydrododecafluorohexanoyl)peroxide, di(ω-hydrotetradecafluoroheptanoyl)peroxide, di(ω-hydrohexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chlorohexafluorobutyryl)peroxide, di(ω-chlorodecafluorohexanoyl)peroxide, di(ω-chlorotetradecafluorooctanoyl)peroxide, ω-hydrododecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the production method, the polymerization initiator can be added at the beginning of polymerization, and can be added also during polymerization. The proportion of the amount of the polymerization initiator added at the beginning of polymerization to the amount of the polymerization initiator added during polymerization is preferably 95/5 to 5/95, more preferably 60/40 to 10/90, and even more preferably 30/70 to 15/85. The method for adding the polymerization initiator during polymerization is not limited, and the entire amount may be added at once, may be added in two or more divided portions, or may be added continuously.

In the production method, the total amount of the polymerization initiator added for use in polymerization is preferably 0.00001 to 10% by mass based on the aqueous medium because a fluoropolymer having a higher molecular weight can be readily produced. The total amount of the polymerization initiator added for use in polymerization is preferably 0.0001% by mass or more, more preferably 0.001% by mass or more, and even more preferably 0.01% by mass or more, and is preferably 5% by mass or less, and more preferably 2% by mass or less.

In the production method, the total amount of the polymerization initiator added for use in polymerization is preferably 0.001 to 10 mol% based on the total amount of monomers added for use in polymerization because a fluoropolymer having a higher molecular weight can be readily produced. The total amount of the polymerization initiator added for use in polymerization is more preferably 0.005 mol% or more, even more preferably 0.01 mol% or more, further preferably 0.1 mol% or more, and most preferably 0.5 mol% or more, and is more preferably 10 mol% or less, even more preferably 5.0 mol% or less, further preferably 2.5 mol% or less, particularly most preferably 2.2 mol% or less, and preferably 2.0 mol% or less.

In the production method, the amount of a monomer that is present and that contains the monomer (I) at the beginning of polymerization is preferably 20% by mass or more based on the amount of the aqueous medium present because a fluoropolymer having a higher molecular weight can be readily produced. The amount of the monomer present is more preferably 30% by mass or more, and even more preferably 40% by mass or more. The upper limit of the amount of the monomer present is not limited, and may be 200% by mass or less from the viewpoint of causing the polymerization to proceed smoothly. The amount of the monomer present at the beginning of polymerization is the total amount of the monomer (I) and, if any, other monomers present in the reactor at the beginning of polymerization.

When the monomer (I) is polymerized in the absence of an aqueous medium, the total amount of the polymerization initiator such as a peroxide added is preferably 0.001 to 10 mol% based on the total amount of the monomer (a monomer mixture) containing the monomer (I). The total amount of the polymerization initiator added for use in polymerization is more preferably 0.005 mol% or more and even more preferably 0.01 mol% or more, and is more preferably 10 mol% or less, even more preferably 5.0 mol% or less, further preferably 2.5 mol% or less, particularly most preferably 2.2 mol% or less, and preferably 2.0 mol% or less.

The monomer (I) can be polymerized by charging a reactor with an aqueous medium, the monomer (I), optionally a further monomer, and optionally a further additive, stirring the contents of the reactor, maintaining the reactor at a

predetermined polymerization temperature, and adding a predetermined amount of a polymerization initiator to thereby initiate the polymerization reaction. After the beginning of the polymerization reaction, the monomer, the polymerization initiator, and the further additive may be added depending on the purpose.

The monomer (I) can be polymerized substantially in the absence of a fluorine-containing surfactant. The expression "substantially in the absence of a fluorine-containing surfactant" as used herein means that the amount of the fluorine-containing surfactant is 10 ppm by mass or less based on the aqueous medium. The amount of the fluorine-containing surfactant is preferably 1 ppm by mass or less, more preferably 100 ppb by mass or less, even more preferably 10 ppb by mass or less, and yet more preferably 1 ppb by mass or less based on the aqueous medium.

The fluorine-containing surfactant may be an anionic fluorine-containing surfactant. The anionic fluorine-containing surfactant may be, for example, a surfactant containing a fluorine atom, in which the total number of carbon atoms in the portion excluding the anionic group is 20 or less.

The fluorine-containing surfactant may also be a fluorine-containing surfactant in which the molecular weight of the anionic moiety is 1,000 or less and preferably 800 or less.

The "anionic moiety" means the portion of the fluorine-containing surfactant excluding the cation. For example, in the case of $F(CF_2)_{n1}COOM$ represented by formula (I) as will be described below, the anionic moiety is the "$F(CF_2)_{n1}COO$" moiety.

Examples of the fluorine-containing surfactant include fluorine-containing surfactants having a LogPOW of 3.5 or less. The LogPOW is a partition coefficient between 1-octanol and water, which is represented by Log P (wherein P is the ratio between the concentration of the fluorine-containing surfactant in octanol and the concentration of the fluorine-containing surfactant in water in a phase-separated octanol/water (1:1) liquid mixture containing the fluorine-containing surfactant).

The LogPOW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6 mass% $HClO_4$ aqueous solution = 1/1 (vol/vol%), flow rate: 1.0 ml/min, sample volume: 300 μL, column temperature: 40°C, detection light: UV210 nm to create a calibration curve concerning each elution time and known octanol/water partition coefficient, and determining the HPLC elution time of a sample liquid based on the calibration curve.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H is replaced by F, where the alkylene group may contain one or more ether bonds and some H may be replaced by Cl; and Y° is an anionic group.

The anionic group Y° may be -COOM, $-SO_2M$, or $-SO_3M$, and may be -COOM or $-SO_3M$.

M is H, a metal atom, $NR^7_4$, imidazolium optionally having a substituent, pyridinium optionally having a substituent, or phosphonium optionally having a substituent, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In $Rf^{n0}$, 50% or more of H may be replaced with fluorine.

Examples of the compound represented by general formula ($N^0$) may be a compound represented by the following general formula ($N^1$):

$$X^{n0}\text{-}(CF_2)_{m1}\text{-}Y^0 \qquad (N^1)$$

(wherein $X^{n0}$ is H, Cl, or F, m1 is an integer of 3 to 15, and Y° is as defined above); a compound represented by the following general formula ($N^2$):

$$Rf^{n1}\text{-O-}(CF(CF_3)CF_2O)_{m2}CFX^{n1}\text{-}Y^0 \qquad (N^2)$$

(wherein $Rf^{n1}$ is a perfluoroalkyl group having 1 to 5 carbon atoms, m2 is an integer of 0 to 3, $X^{n1}$ is F or $CF_3$, and Y° is as defined above); a compound represented by the following general formula ($N^3$):

$$Rf^{n2}(CH_2)_{m3}\text{-}(Rf^{n3})_q\text{-}Y^0 \qquad (N^3)$$

(wherein $Rf^{n2}$ is a partially or fully fluorinated alkyl group having 1 to 13 carbon atoms and optionally containing an ether bond, m3 is an integer of 1 to 3, $Rf^{n3}$ is a linear or branched perfluoroalkylene group having 1 to 3 carbon atoms, q is 0 or 1, and Y° is as defined above); a compound represented by the following general formula ($N^4$):

$$Rf^{n4}\text{-O-}(CY^{n1}Y^{n2})_pCF_2\text{-}Y^0 \qquad (N^4)$$

(wherein $Rf^{n4}$ is a linear or branched partially or fully fluorinated alkyl group having 1 to 12 carbon atoms and optionally containing an ether bond and/or a chlorine atom, $Y^{n1}$ and $Y^{n2}$ are the same or different and are each H or F, p is 0 or 1, and Y° is as defined above); and a compound represented by the following general formula ($N^5$):

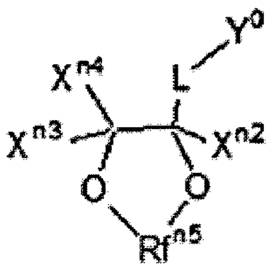

($N^5$)

(wherein $X^{n2}$, $X^{n3}$, and $X^{n4}$ may be the same or different and are each H, F, or a linear or branched, partially or fully fluorinated alkyl group having 1 to 6 carbon atoms and optionally containing an ether bond, $Rf^{n5}$ is a linear or branched, partially or fully fluorinated alkylene group having 1 to 3 carbon atoms and optionally containing an ether bond, L is a linking group, and Y° is as defined above, provided that the total number of carbon atoms of $X^{n2}$, $X^{n3}$, $X^{n4}$, and $Rf^{n5}$ is 18 or less).

Specific examples of the compound represented by general formula ($N^0$) include perfluorocarboxylic acid (I) represented by the following general formula (I), ω-H perfluorocarboxylic acid (II) represented by the following general formula (II), perfluoroether carboxylic acid (III) represented by the following general formula (III), perfluoroalkylalkylenecarboxylic acid (IV) represented by the following general formula (IV), perfluoroalkoxyfluorocarboxylic acid (V) represented by the following general formula (V), perfluoroalkylsulfonic acid (VI) represented by the following general formula (VI), ω-H perfluorosulfonic acid (VII) represented by the following general formula (VII), perfluoroalkylalkylene sulfonic acid (VIII) represented by the following general formula (VIII), alkylalkylenecarboxylic acid (IX) represented by the following general formula (IX), fluorocarboxylic acid (X) represented by the following general formula (X), alkoxyfluorosulfonic acid (XI) represented by the following general formula (XI), compound (XII) represented by the following general formula (XII), and compound (XIII) represented by the following general formula (XIII).

The perfluorocarboxylic acid (I) is represented by the following general formula (I):

$$F(CF_2)_{n1}COOM \qquad (I)$$

wherein n1 is an integer of 3 to 14, M is H, a metal atom, $NR^7_4$, imidazolium optionally having a substituent, pyridinium optionally having a substituent, or phosphonium optionally having a substituent, and $R^7$ is H or an organic group.

The ω-H perfluorocarboxylic acid (II) is represented by the following general formula (II):

$$H(CF_2)_{n2}COOM \qquad (II)$$

wherein n2 is an integer of 4 to 15; and M is as defined above.

The perfluoroethercarboxylic acid (III) is represented by the following general formula (III):

$$Rf^1\text{-}O\text{-}(CF(CF_3)CF_2O)_{n3}CF(CF_3)COOM \quad (III)$$

wherein $Rf^1$ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

$$Rf^2(CH_2)_{n4}Rf^3COOM \quad (IV)$$

wherein $Rf^2$ is a perfluoroalkyl group having 1 to 5 carbon atoms, $Rf^3$ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

$$Rf^4\text{-}O\text{-}CY^1Y^2CF_2\text{-}COOM \quad (V)$$

wherein $Rf^4$ is a linear or branched, partially or fully fluorinated alkyl group having 1 to 12 carbon atoms and optionally containing an ether bond and/or a chlorine atom, $Y^1$ and $Y^2$ are the same or different and are H or F, and M is as defined above.

The perfluoroalkylsulfonic acid (VI) is represented by the following general formula (VI):

$$F(CF_2)_{n5}SO_3M \quad (VI)$$

wherein n5 is an integer of 3 to 14, and M is as defined above.

The ω-H perfluorosulfonic acid (VII) is represented by the following general formula (VII):

$$H(CF_2)_{n6}SO_3M \quad (VII)$$

wherein n6 is an integer of 4 to 14, and M is as defined above.

The perfluoroalkylalkylenesulfonic acid (VIII) is represented by the following general formula (VIII):

$$Rf^5(CH_2)_{n7}SO_3M \quad (VIII)$$

wherein $Rf^5$ is a perfluoroalkyl group having 1 to 13 carbon atoms, n7 is an integer of 1 to 3, and M is as defined above.

The alkylalkylenecarboxylic acid (IX) is represented by the following general formula (IX):

$$Rf^6(CH_2)_{n8}COOM \quad (IX)$$

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$$Rf^7\text{-}O\text{-}Rf^8\text{-}O\text{-}CF_2\text{-}COOM \quad (X)$$

wherein $Rf^7$ is a linear or branched partially or fully fluorinated alkyl group having 1 to 6 carbon atoms and optionally containing an ether bond and/or a chlorine atom; $Rf^8$ is a linear or branched partially or fully fluorinated alkyl group having 1 to 6 carbon atoms; and M is as defined above.

The alkoxyfluorosulfonic acid (XI) is represented by the following general formula (XI):

$$Rf^9\text{-}O\text{-}CY^1Y^2CF_2\text{-}SO_3M \quad (XI)$$

wherein $Rf^9$ is a linear or branched, partially or fully fluorinated alkyl group having 1 to 12 carbon atoms, optionally containing chlorine, and optionally containing an ether bond, $Y^1$ and $Y^2$ are the same or different and are H or F, and M is as defined above.

The compound (XII) is represented by the following general formula (XII):

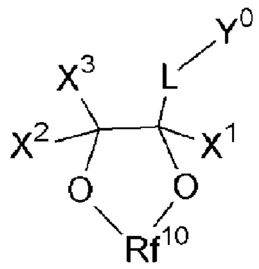

(XII)

wherein $X^1$, $X^2$, and $X^3$ may be the same or different and are H, F, or a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and Y° is an anionic group.

Y° may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$Rf^{11}$-O-$(CF_2CF(CF_3)O)_{n9}(CF_2O)_{n10}CF_2COOM$ (XIII)

wherein $Rf^{11}$ is a fluoroalkyl group having 1 to 5 carbon atoms containing chlorine, n9 is an integer of 0 to 3, n10 is an integer of 0 to 3, and M is as defined above. Examples of the compound (XIII) include $CF_2ClO(CF_2CF(CF_3)O)_{n9}(CF_2O)_{n10}CF_2COONH_4$ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

Examples of the fluorine-containing surfactant include compounds represented by the following formulae. The fluorine-containing surfactant may be a mixture of these compounds. In one embodiment of the polymerization, the monomer (I) is polymerized substantially in the absence of compounds represented by the following formulae:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$, and

$CF_2ClCF(CF_3)OCF_2CF(CF_3)OCF_2COOM$,

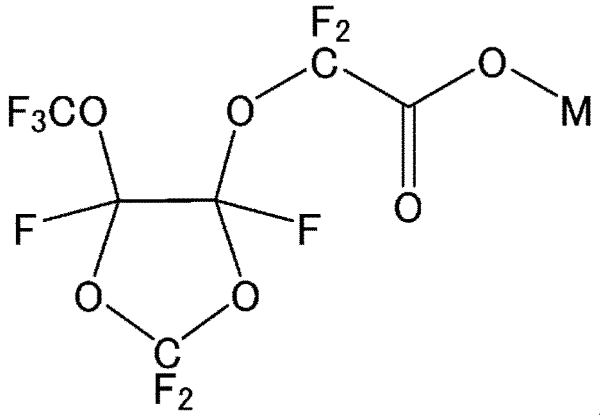

wherein M is H, a metal atom, $NR^7_4$, imidazolium optionally having a substituent, pyridinium optionally having a substituent, or phosphonium optionally having a substituent, and $R^7$ is H or an organic group.

In the production method, the monomer (I) is polymerized in an aqueous medium, and thus an aqueous solution containing a fluoropolymer and the aqueous medium is usually obtained. The resulting fluoropolymer-containing aqueous solution may be used as-is in various applications, and the fluoropolymer separated from the aqueous solution may be used in various applications. The method for separating the fluoropolymer from the aqueous solution is not limited. For example, the fluoropolymer can be separated by a method such as coagulation, washing, or drying of the fluoropolymer in the aqueous solution.

The fluoropolymer or the aqueous solution obtained by polymerizing the monomer (I) includes a fraction having a molecular weight of 3,000 or less, a fraction having a molecular weight of 2,000 or less, a fraction having a molecular weight of 1,500 or less, a fraction having a molecular weight of 1,000 or less, a dimer and a trimer of the monomer (I), and the like. In order to remove these, the fluoropolymer or the aqueous solution obtained by polymerizing the monomer (I) may be post-treated.

For example, in the production method, a composition containing the aqueous medium and the fluoropolymer may be recovered after the polymerization of the monomer (I) is complete, and the resulting composition may be treated by at least one means selected from the group consisting of ultrafiltration, microfiltration, dialysis membrane treatment, liquid separation, and reprecipitation.

When the monomer (I) is polymerized in the absence of an aqueous medium, a fluoropolymer or a composition containing a fluoropolymer and the like is obtained after polymerization is complete, and it is thus possible that the fluoropolymer or the composition is mixed with an aqueous medium, and the resulting composition containing the aqueous medium and the fluoropolymer is treated by at least one means selected from the group consisting of ultrafiltration, microfiltration, dialysis membrane treatment, liquid separation, and reprecipitation.

The composition obtained by polymerizing the monomer (I) usually contains a dimer and a trimer in a total amount of more than 1.0% by mass based on the mass of the fluoropolymer of the monomer (I). The content of the dimer and the trimer may be, for example, 2.0% by mass or more, may be 3.0% by mass or more, may be 30.0% by mass or less, and may be 20.0% by mass or less based on the fluoropolymer of the monomer (I).

The composition obtained by polymerizing the monomer (I) and the further monomer copolymerizable with the monomer (I) usually contains a dimer and a trimer composed of the polymerization unit (I) derived from the monomer (I) and the polymerization unit derived from the further monomer copolymerizable with the monomer (I) in a total amount exceeding 1.0% by mass based on the mass of the fluoropolymer. The content of the dimer and the trimer composed of the polymerization unit (I) and the polymerization unit derived from the further monomer may be, for example, 2.0% by mass or more, may be 3.0% by mass or more, may be 30.0% by mass or less, and may be 20.0% by mass or less based on the fluoropolymer.

The content of the dimer and the trimer in the composition can be determined by performing a gel permeation chromatography (GPC) analysis on the composition and calculating the total proportion of the peak areas (area percentages) of the dimer and the trimer to the total area of all peaks of the chromatogram obtained by the GPC analysis.

Next, preferably the resulting composition containing the aqueous medium and the fluoropolymer is recovered, and the resulting composition is treated by at least one means selected from the group consisting of ultrafiltration, microfiltration, dialysis membrane treatment, liquid separation, and reprecipitation. By this treatment, the dimer and the trimer of the monomer (I) contained in the composition obtained by polymerizing the monomer (I), or the dimer and the

trimer composed of the polymerization unit (I) and the polymerization unit derived from the further monomer, can be removed from the composition. The means of treatment is more preferably at least one means selected from the group consisting of ultrafiltration, microfiltration, liquid separation, and reprecipitation, even more preferably at least one means selected from the group consisting of ultrafiltration and liquid separation, and particularly preferably ultrafiltration.

The polymerization of the monomer (I) produces a dimer and a trimer of the monomer (I) and, as a result, the dimer and the trimer of the monomer (I) are contained in the fluoropolymer. The mechanism by which the dimer and the trimer of the monomer (I) are produced is not necessarily clear, but it is conjectured that by the polymerization reaction in the polymerization system composed mostly of the monomer (I) among the monomers present in the polymerization system in particular, dimerization and trimerization of the monomer (I) occurs with non-negligible frequency.

When removing the dimer and the trimer, usually the unreacted monomer (I) is also removed from the composition at the same time. Also, a fraction having a molecular weight of 3,000 or less, a fraction having a molecular weight of 2,000 or less, a fraction having a molecular weight of 1,500 or less, and a fraction having a molecular weight of 1,000 or less can be removed by suitably selecting the means of post-treatment.

The composition obtained by the polymerization of the monomer (I) may be a composition as polymerized that is obtained from polymerization, may be what is obtained by diluting or concentrating a composition as polymerized that is obtained from polymerization, or may be what is obtained by dispersion stabilization treatment or the like. In order to facilitate ultrafiltration, microfiltration, or dialysis membrane treatment, it is also preferable to regulate the viscosity of the composition by these treatments.

The content of the fluoropolymer of the monomer (I) in the composition is not limited, and may be, for example, 0.1 to 40.0% by mass. The content of the fluoropolymer in the composition, from the viewpoint of the removal efficiency of the dimer and the trimer, is preferably 30.0% by mass or less, more preferably 25.0% by mass or less, even more preferably 20.0% by mass or less, particularly preferably 10.0% by mass or less, and is preferably 0.5% by mass or more, more preferably 1.0% by mass or more, even more preferably 1.2% by mass or more, and particularly preferably 1.5% by mass or more. The content of the fluoropolymer in the composition can be regulated by, for example, a method involving adding water to the composition obtained by polymerizing the monomer (I), or a method involving concentrating the composition obtained by polymerizing the monomer (I).

The pH of the composition is preferably -7.0 to 11.0, more preferably -6.0 to 8.0, and even more preferably -5.0 to 7.0. The pH of the composition can be regulated by adding a pH adjuster to the composition obtained by polymerizing the monomer (I). The pH adjuster may be an acid or an alkali, such as a phosphoric acid salt, sodium hydroxide, potassium hydroxide, or aqueous ammonia.

The viscosity of the composition is preferably 25 mPa·s or less because ultrafiltration, microfiltration, or dialysis membrane treatment is facilitated. The viscosity of the composition can be regulated by, for example, a method involving regulating the weight average molecular weight and the number average molecular weight of the fluoropolymer, a method involving regulating the concentration of the fluoropolymer in the composition, or a method involving regulating the temperature of the composition.

Ultrafiltration or microfiltration is not limited no matter whether it is cross-flow filtration or dead-end filtration, and cross-flow filtration is preferable from the viewpoint of reducing the clogging of a membrane.

Ultrafiltration can be performed using an ultrafiltration membrane. Ultrafiltration can be performed using, for example, an ultrafiltration apparatus having an ultrafiltration membrane, and a centrifugal ultrafiltration method, a batch-type ultrafiltration method, a circulation-type ultrafiltration method, and the like can be employed.

The molecular weight cut-off of the ultrafiltration membrane is usually about $0.1 \times 10^4$ to $30 \times 10^4$ Da. The molecular weight cut-off of the ultrafiltration membrane is preferably $0.3 \times 10^4$ Da or more because the clogging of the membrane can be suppressed and the dimer and the trimer can be efficiently reduced. The cut-off molecular weight is more preferably $0.5 \times 10^4$ Da or more, particularly preferably $0.6 \times 10^4$ Da or more, and most preferably $0.8 \times 10^4$ Da or more. The molecular weight cut-off may be $1.0 \times 10^4$ Da or more. From the viewpoint of the removal efficiency of the dimer and the trimer, the molecular weight cut-off is preferably $20 \times 10^4$ Da or less, and more preferably $10 \times 10^4$ Da or less.

The molecular weight cut-off of the ultrafiltration membrane can be, for example, a molecular weight at which 90% of polystyrene having a known weight average molecular weight that is attempted to pass through the membrane is blocked. Polystyrene can be quantified by gel permeation chromatography.

The ultrafiltration membrane is not limited and may be in a conventionally known form, and examples include a hollow fiber type, a flat membrane type, a spiral type, and a tubular type. From the viewpoint of suppressing clogging, a hollow fiber type is preferable.

The inner diameter of the hollow fiber type ultrafiltration membrane is not limited, and may be, for example, 0.1 to 2 mm, and is preferably 0.8 to 1.4 mm.

The length of the hollow fiber type ultrafiltration membrane is not limited, and may be, for example, 0.05 to 3 m, and is preferably 0.05 to 2 m.

The material of the ultrafiltration membrane is not limited, and examples include organic materials such as

cellulose, cellulose ester, polysulfone, sulfonated polysulfone, polyethersulfone, sulfonated polyether sulfone, chlorinated polyethylene, polypropylene, polyolefin, polyvinyl alcohol, polymethylmethacrylate, polyacrylonitrile, polyvinylidene fluoride, and polytetrafluoroethylene, metals such as stainless steel, and inorganic materials such as ceramics.

The material of the ultrafiltration membrane is preferably an organic material, more preferably chlorinated polyethylene, polypropylene, polyvinylidene fluoride, polytetrafluoroethylene, polyacrylonitrile, polysulfone, or polyethersulfone, and even more preferably polyacrylonitrile, polysulfone, or polyvinylidene fluoride.

Specific examples of the ultrafiltration membrane include G-5 type, G-10 type, G-20 type, G-50 type, PW type, and HWS UF type of DESAL; HFM-180, HFM-183, HFM-251, HFM-300, HFM-116, HFM-183, HFM-300, HFK-131, HFK-328, MPT-U20, MPS-U20P, and MPS-U20S of KOCH; SPE1, SPE3, SPE5, SPE10, SPE30, SPV5, SPV50, and SOW30 of Synder; Microza(R) UF series manufactured by Asahi Kasei Corporation; and NTR 7410 manufactured by Nitto Denko Corporation.

From the viewpoint of removal efficiency of the dimer and the trimer, ultrafiltration is preferably performed at a pressure of 0.01 MPa or more. More preferably, the pressure is 0.03 MPa or more, and even more preferably 0.05 MPa or more. From the viewpoint of pressure resistance, the pressure is preferably 0.5 MPa or less, more preferably 0.25 MPa or less, and even more preferably 0.2 MPa or less.

From the viewpoint of the removal efficiency of the dimer and the trimer, ultrafiltration is preferably performed at a flow rate of 10 mL/min or more and more preferably performed at a flow rate of 50 mL/min or more, and is preferably performed at a flow rate of 5,000 mL/min or less and more preferably performed at a flow rate of 1,000 mL/min or less.

Microfiltration can be performed using a microfiltration membrane. The microfiltration membrane usually has an average pore size of 0.05 to 1.0 $\mu$m.

The microfiltration membrane preferably has an average pore size of 0.1 $\mu$m or more because the dimer and the trimer can be efficiently removed. The average pore size is more preferably 0.075 $\mu$m or more, and even more preferably 0.1 $\mu$m or more. The average pore size is preferably 1.00 $\mu$m or less. The average pore size is more preferably 0.50 $\mu$m or less, and even more preferably 0.25 $\mu$m or less.

The average pore size of the microfiltration membrane can be measured in accordance with ASTM F316-03 (a bubble point method).

The microfiltration membrane is not limited and may be in a conventionally known form, and examples include a hollow fiber type, a flat membrane type, a spiral type, and a tubular type. From the viewpoint of suppressing clogging, a hollow fiber type is preferable.

The inner diameter of the hollow fiber type microfiltration membrane is not limited, and may be, for example, 0.1 to 2 mm, and is preferably 0.8 to 1.4 mm.

The length of the hollow fiber type microfiltration membrane is not limited, and may be, for example, 0.05 to 3 m, and is preferably 0.05 to 2 m.

Examples of the material of the microfiltration membrane include cellulose, aromatic polyamide, polyvinyl alcohol, polysulfone, polyether sulfone, polyvinylidene fluoride, polyethylene, polyacrylonitrile, polypropylene, polycarbonate, polytetrafluoroethylene, ceramics, and metal. Among these, aromatic polyamide, polyvinyl alcohol, polysulfone, polyvinylidene fluoride, polyethylene, polyacrylonitrile, polypropylene, polycarbonate, or polytetrafluoroethylene is preferable, and polyacrylonitrile or polyvinylidene fluoride is particularly preferable.

Specific examples of the microfiltration membrane include Cefilt manufactured by NGK Insulators, Ltd.; Microza U Series and Microza P Series manufactured by Asahi Kasei Corporation; Poreflon SPMW, Poreflon OPMW, and Poreflon PM manufactured by Sumitomo Electric Industries, Ltd.; Trayfil manufactured by Toray Industries, Inc.; NADIR MP005 and NADIR MV020 manufactured by Microdyn-Nadir; and X-Flow manufactured by Norit.

From the viewpoint of the removal efficiency of the dimer and the trimer, microfiltration is preferably performed at a pressure of 0.01 MPa or more. The pressure is more preferably 0.03 MPa or more, and even more preferably 0.05 MPa or more. From the viewpoint of pressure resistance, the pressure is preferably 0.5 MPa or less, more preferably 0.25 MPa or less, and even more preferably 0.2 MPa or less.

From the viewpoint of the removal efficiency of the dimer and the trimer, microfiltration is preferably performed at a flow rate of 10 mL/min or more and more preferably performed at a flow rate of 50 mL/min or more, and is preferably performed at a flow rate of 5,000 mL/min or less and more preferably performed at a flow rate of 1,000 mL/min or less.

The dialysis membrane treatment is performed using a dialysis membrane. The dialysis membrane usually has a molecular weight cut-off of $0.05 \times 10^4$ to $100 \times 10^4$ Da.

The molecular weight cut-off of the dialysis membrane is preferably $0.3 \times 10^4$ Da or more because the clogging of the membrane can be suppressed and the dimer and the trimer can be efficiently removed. The molecular weight cut-off is more preferably $0.5 \times 10^4$ Da or more, even more preferably $0.6 \times 10^4$ Da or more, and yet more preferably $0.8 \times 10^4$ Da or more. The molecular weight cut-off may be $1.0 \times 10^4$ Da or more.

From the viewpoint of the removal efficiency of the dimer and the trimer, the molecular weight cut-off is preferably $20 \times 10^4$ Da or less, and more preferably $10 \times 10^4$ Da or less.

The molecular weight cut-off of the dialysis membrane can be measured by, for example, the same method as

ultrafiltration membrane.

The material of the dialysis membrane is not limited, and examples include cellulose, polyacrylonitrile, polymethylmethacrylate, ethylene vinyl alcohol copolymers, polysulfone, polyamide, and polyester polymer alloy.

Specific examples of the dialysis membrane include Spectra/Por(R) Float-A-Lyzer, Tube-A-Lyzer, Dialysis tubing, 6 Dialysis tubing, and 7 Dialysis tubing manufactured by Spectrum Laboratories Inc.

Ultrafiltration, microfiltration, or dialysis membrane treatment is preferably performed at a temperature of 10°C or higher. The temperature is more preferably 15°C or higher, even more preferably 20°C or higher, and particularly preferably 30°C or higher. By adjusting the temperature within the above range, the dimer and the trimer can be more efficiently reduced. The temperature is preferably 90°C or lower, more preferably 80°C or lower, even more preferably 70°C or lower, and particularly preferably 60°C or lower.

Ultrafiltration, microfiltration, or dialysis membrane treatment can be performed while adding water to the composition or while regulating the pH of the composition. Water may be intermittently added to the composition or continuously added to the composition.

The end point of ultrafiltration, microfiltration, or dialysis membrane treatment is suitably determined, and is not limited. In ultrafiltration, microfiltration, or dialysis membrane treatment, in order to improve the durability of the filtration membrane, the membrane may be backwashed with water once per a filtration time of 1 to 24 hours as a rough guide.

Liquid separation can be performed by, for example, adding an organic solvent to the composition to separate the composition into two phases, i.e., an aqueous phase and an organic solvent phase, and recovering the aqueous phase.

Reprecipitation can be performed by, for example, adding a poor solvent to the composition dropwise to precipitate the fluoropolymer, recovering the precipitated fluoropolymer, dissolving the recovered fluoropolymer in a good solvent, adding the resulting solution to a poor solvent dropwise to precipitate the fluoropolymer again, and recovering the precipitated fluoropolymer.

By post-treating the composition containing the fluoropolymer of the monomer (I) by the means described above, a fluoropolymer-containing aqueous solution that is substantially free of the dimer and the trimer, or a fluoropolymer-containing aqueous solution with a reduced content of a fraction having a molecular weight of 3,000 or less, is usually obtained. The fluoropolymer-containing aqueous solution obtained by treating the composition may be used as-is in various applications, and the fluoropolymer separated from the aqueous solution may be used in various applications. The method for separating the fluoropolymer from the aqueous solution is not limited. For example, the fluoropolymer can be separated by a method such as coagulation, washing, or drying of the fluoropolymer in the aqueous solution.

The production method described above provides a fluoropolymer or an aqueous solution containing a fluoropolymer and an aqueous medium.

While embodiments have been described above, it will be understood that various changes in form and detail can be made without departing from the gist and scope of the claims.

## EXAMPLES

Next, embodiments of the present disclosure will now be described with reference to Examples, but the present disclosure is not limited only to these Examples.

The numerical values of the Examples were measured by the following methods.

(Oxygen concentration in reactor)

Gas discharged from the discharge gas line of a reactor in a $N_2$ flow was measured and analyzed using a low-concentration oxygen analyzer (trade name "PS-820-L", manufactured by Iijima Electronics Corporation) to thus determine the oxygen concentration during reaction.

(Concentration of fluoropolymer in aqueous solution (solid concentration))

In a vacuum dryer, about 1 g of an aqueous solution containing a fluoropolymer was dried at 60°C for 60 minutes, the mass of non-volatile matter was measured, and the ratio of the mass of the non-volatile matter to the mass (1 g) of the aqueous solution was expressed in percentage and regarded as the fluoropolymer concentration.

(Method for measuring weight average molecular weight (Mw), number average molecular weight (Mn), and content of fraction having molecular weight of 3,000 or less)

Mw and Mn of a fluoropolymer were measured by gel permeation chromatography (GPC) using 1260 Infinity II manufactured by Agilent Technologies using columns manufactured by Tosoh Corporation (one TSKgel G3000$PW_{XL}$ and one TSGgel $GMPW_{XL}$) connected while allowing a mixed solvent of a Tris buffer and acetonitrile (Tris buffer :

acetonitrile = 8 : 2 (v/v)) to flow at a flow rate of 0.5 ml/min, and the molecular weights were calculated using monodisperse polyethylene oxide (PEO) and polyethylene glycol (PEG) as standards.

(Alternating ratio)

The alternating ratio was obtained by performing $^{19}$F-NMR measurement on a fluoropolymer and calculating the alternating ratio from the respective total integral values of two peaks (a peak appearing at -75 ppm to -80 ppmm and a peak appearing at - 80 ppm to -84 ppm) derived from "$OCF_2$*" of $CF_2=CFOCF_2CF_2SO_3Na$ appearing in the NMR spectrum according to the following formula:

$$\text{Alternating ratio (\%)} \geq (b\times2)/(a+b)\times100$$

a: Total integral value of peak in -75 ppm to -80 ppmm area
b: Total integral value of peak in -80 ppm to -84 ppm area

The alternating ratio calculated above is the proportion of a polymerization unit adjacent to the polymerization unit derived from VdF among the polymerization units derived from $CF_2=CFOCF_2CF_2SO_3Na$ in the fluoropolymer.

The proportion of the carbon atom (C*), in the polymerization unit derived from VdF($C^*H_2=CF_2$), bonded to the carbon atom (C*) in the polymerization unit derived from $CF_2=C^*FOCF_2CF_2SO_3Na$ is obtained by the following formula:

$$\text{Proportion (\%)} = (b\times2)/(a+b)\times100$$

The proportion of the carbon atoms (the carbon atom (C**) in the polymerization unit derived from $C^{**}F_2=C^{**}FOCF_2CF_2SO_3Na$ and the carbon atom (C**) in the polymerization unit derived from VdF($CH_2=C^{**}F_2$)), other than the carbon atom (C*) in the polymerization unit derived from VdF($C^*H_2=CF_2$), bonded to the carbon atom (C*) in the polymerization unit derived from $CF_2=C^*FOCF_2CF_2SO_3Na$ is obtained by the following formula:

$$\text{Proportion (\%)} = (a-b)/(a+b)\times100$$

(Method for measuring content of dimer and trimer of monomer in fluoropolymer)

(1) Extraction from aqueous solution

The solid content of an aqueous solution of a fluoropolymer was measured, and the amount of the aqueous solution corresponding to 0.2 g of the solid content of the fluoropolymer was weighed. Thereafter, water and methanol were added such that the volume ratio of water, including water contained in the aqueous solution, to methanol was 50/50 (% by volume) to obtain a mixed solution containing the fluoropolymer, water, and methanol. Thereafter, the resulting mixed solution was filtered using an ultrafiltration disc (a molecular weight cut-off of 3,000 Da), and a recovered solution containing the fluoropolymer was recovered.

The recovered solution was analyzed using a liquid chromatograph-mass spectrometer (Waters, LC-MS ACQUITY UPLC/TQD) to obtain a chromatogram of the recovered solution.

The content of a dimer and a trimer of a monomer contained in the recovered solution was obtained by converting the integral values of peaks derived from the dimer and the trimer of the monomer appearing in the chromatogram of the recovered solution into the content of the dimer and the trimer of the monomer using the calibration curve of an analogous monomer.

(2) Calibration curve of monomer

Five concentration levels of a methanol standard solution of a monomer having a known content of 1 ng/mL to 100 ng/mL were prepared, and measurement was made using a liquid chromatograph-mass spectrometer (Waters, LC-MS ACQUITY UPLC/TQD). The relationship between the content of each monomer and the integral value of a peak corresponding to the content was plotted to create a calibration curve (first-order approximation) of each monomer. Next, the calibration curve (first-order approximation) of each monomer was used to create calibration curves of the dimer and the trimer of each monomer.

Measuring instrument configuration and LC-MS measurement conditions

[Table 1]

Table 1

| | | | | |
|---|---|---|---|---|
| LC unit | | | | |
| | Device | Acquity UPLC manufactured by Waters | | |
| | Column | Acquity UPLC BEH C18 1.7 μm (2.1×50 mm) manufactured by Waters | | |
| | Mobile phase | A $CH_3CN$ | | |
| | | B 20mM $CH_3COONH_4/H_2O$ | | |
| | | | 0→1.5 min | A:B=10:90 |
| | | | 1.5→8.5 min | A:B=10:90 → A:B=90:10 Linear gradient |
| | | | 8.5→10 min | A:B=90:10 |
| | Flow rate | | 0.4 mL/min | |
| | Column temperature | 40°C | | |
| | Sample injection volume | 5 μL | | |
| MS unit | | | | |
| | Device | TQ Detecter | | |
| | Measurement mode | MRM(Multiple Reaction Monitoring) | | |
| | Ionization method | Electrospray ionization<br>SCAN | | |

The quantification limit in this measuring instrument configuration is 1 ng/mL.

<Synthesis Example 1>

A reaction was charged with 170 g of sodium 1,1,2,2-tetrafluoro-2-((1,2,2-trifluorovinyl)oxy)ethane-1-sulfonate, 340 g of water, and ammonium persulfate (APS) in an amount corresponding to 2.0 mol% based on the amount of sodium 1,1,2,2-tetrafluoro-2-((1,2,2-trifluorovinyl)oxy)ethane-1-sulfonate, and the mixture was stirred at 40°C for 72 hours in a $N_2$ flow. The oxygen concentration in the reactor varied between 15 volume ppm and 800 volume ppm.

Water was added to the resulting fluoropolymer-containing aqueous solution to regulate the fluoropolymer concentration to 3.8% by mass, and then the aqueous solution was brought into contact with an ultrafiltration membrane (a molecular weight cut-off of 6,000 Da, made of polysulfone) at 25°C at a water pressure of 0.1 MPa to perform ultrafiltration. While suitably adding water, ultrafiltration was continued until a filtrate of water in an amount 4 times greater than the aqueous solution was eventually eluted, and thus an aqueous fluoropolymer solution containing a repeating unit derived from sodium 1,1,2,2-tetrafluoro-2-((1,2,2-trifluorovinyl)oxy)ethane-1-sulfonate was obtained. The concentration of the aqueous solution obtained by performing ultrafiltration was 1.6% by mass.

The aqueous solution obtained by performing ultrafiltration was analyzed. The resulting fluoropolymer had a weight average molecular weight (Mw) of $1.0 \times 10^4$ and a number average molecular weight (Mn) of $0.8 \times 10^4$. The content of the dimer and the trimer having a repeating unit derived from sodium 1,1,2,2-tetrafluoro-2-((1,2,2-trifluorovinyl)oxy)ethane-1-sulfonate in the aqueous solution obtained by performing ultrafiltration was 0.1% by mass or less based on the fluoropolymer. The content of the fraction having a molecular weight of 3,000 or less in the aqueous solution obtained by performing ultrafiltration was 0.5% or less. When this aqueous solution was analyzed by DLS, it was not possible to measure the particle size.

<Synthesis Example 2>

First, 300 ml of Amberlite (IR120B(H)-HG) was weighed into a container and washed with water until the color disappeared, then 500 ml of 1M-HCl was added, and the mixture was stirred at room temperature for 1 hour. A stoppered

column was packed with Amberlite, and water was allowed to flow until the acidity of the effluent became neutral. The aqueous solution containing the fluoropolymer obtained in Synthesis Example 1 was added to the stoppered column to start dripping. After completion of dripping, water was allowed to flow until the dripped liquid became neutral, and thus an aqueous fluoropolymer solution containing a repeating unit derived from 1,1,2,2-tetrafluoro-2-((1,2,2-trifluorovinyl)oxy)ethane-1-sulfonic acid was obtained. The resulting aqueous solution had a concentration of 1.5% by mass.

The aqueous solution obtained by performing a treatment involving a cation exchange resin was analyzed. The resulting fluoropolymer had a weight average molecular weight (Mw) of $1.0 \times 10^4$ and a number average molecular weight (Mn) of $0.8 \times 10^4$. The content of the dimer and the trimer having a repeating unit derived from 1,1,2,2-tetrafluoro-2-((1,2,2-trifluorovinyl)oxy)ethane-1-sulfonic acid in the aqueous solution obtained by performing the treatment involving a cation exchange resin was 0.1% by mass or less based on the fluoropolymer. The content of the fraction having a molecular weight of 3,000 or less in the aqueous solution obtained by performing the treatment involving a cation exchange resin was 0.5% or less. When this aqueous solution was analyzed by DLS, it was not possible to measure the particle size.

<Synthesis Example 3>

A reactor was charged with 10 g of sodium 1,1,2,2-tetrafluoro-2-((1,2,2-trifluorovinyl)oxy)ethane-1-sulfonate, 20 g of water, and ammonium persulfate (APS) in an amount corresponding to 2.0 mol% based on the amount of sodium 1,1,2,2-tetrafluoro-2-((1,2,2-trifluorovinyl)oxy)ethane-1-sulfonate, and the mixture was stirred at 52°C for 72 hours in a $N_2$ flow. The oxygen concentration in the reactor varied between 20 volume ppm and 70 volume ppm.

Water was added to the resulting fluoropolymer-containing aqueous solution to regulate the fluoropolymer concentration to 3.8% by mass, and then the aqueous solution was brought into contact with an ultrafiltration membrane (a molecular weight cut-off of 6,000 Da, made of polysulfone) at 25°C at a water pressure of 0.1 MPa to perform ultrafiltration. While suitably adding water, ultrafiltration was continued until a filtrate of water in an amount 4 times greater than the aqueous solution was eventually eluted, and thus an aqueous fluoropolymer solution containing a repeating unit derived from sodium 1,1,2,2-tetrafluoro-2-((1,2,2-trifluorovinyl)oxy)ethane-1-sulfonate was obtained. The concentration of the aqueous solution obtained by performing ultrafiltration was 1.8% by mass.

The aqueous solution obtained by performing ultrafiltration was analyzed. The resulting fluoropolymer had a weight average molecular weight (Mw) of $0.7 \times 10^4$ and a number average molecular weight (Mn) of $0.6 \times 10^4$. The content of the dimer and the trimer having a repeating unit derived from sodium 1,1,2,2-tetrafluoro-2-((1,2,2-trifluorovinyl)oxy)ethane-1-sulfonate in the aqueous solution obtained by performing ultrafiltration was 0.1% by mass or less based on the fluoropolymer. The content of the fraction having a molecular weight of 3,000 or less in the aqueous solution obtained by performing ultrafiltration was 0.5% or less. When this aqueous solution was analyzed by DLS, it was not possible to measure the particle size.

<Synthesis Example 4>

First, 20 ml of Amberlite (IR120B(H)-HG) was weighed into a container and washed with water until the color disappeared, then 40 ml of 1M-HCl was added, and the mixture was stirred at room temperature for 1 hour. A stoppered column was packed with Amberlite, and water was allowed to flow until the acidity of the effluent became neutral. The aqueous solution containing the fluoropolymer obtained in Synthesis Example 3 was added to the stoppered column to start dripping. After completion of dripping, water was allowed to flow until the dripped liquid became neutral, and thus an aqueous fluoropolymer solution containing a repeating unit derived from 1,1,2,2-tetrafluoro-2-((1,2,2-trifluorovinyl)oxy)ethane-1-sulfonic acid was obtained. The resulting aqueous solution had a concentration of 2.0% by mass.

The aqueous solution obtained by performing a treatment involving a cation exchange resin was analyzed. The resulting fluoropolymer had a weight average molecular weight (Mw) of $0.7 \times 10^4$ and a number average molecular weight (Mn) of $0.6 \times 10^4$. The content of the dimer and the trimer having a repeating unit derived from 1,1,2,2-tetrafluoro-2-((1,2,2-trifluorovinyl)oxy)ethane-1-sulfonic acid in the aqueous solution obtained by performing the treatment involving a cation exchange resin was 0.1% by mass or less based on the fluoropolymer. The content of the fraction having a molecular weight of 3,000 or less in the aqueous solution obtained by performing the treatment involving a cation exchange resin was 0.5% or less. When this aqueous solution was analyzed by DLS, it was not possible to measure the particle size.

<Synthesis Example 5>

A reactor was charged with 10 g of sodium 1,1,2,2-tetrafluoro-2-((1,2,2-trifluorovinyl)oxy)ethane-1-sulfonate, 20 g of water, and ammonium persulfate (APS) in an amount corresponding to 2.0 mol% based on the amount of sodium 1,1,2,2-tetrafluoro-2-((1,2,2-trifluorovinyl)oxy)ethane-1-sulfonate, and the mixture was stirred at 40°C for 72 hours in a

$N_2$ flow. The oxygen concentration in the reactor varied between 15 volume ppm and 40 volume ppm.

The resulting fluoropolymer-containing aqueous solution was subjected to filtration by being brought into contact with a dialysis membrane (a molecular weight cut-off of 3,500 Da, made of cellulose) at room temperature, and thus an aqueous fluoropolymer solution was obtained. The concentration of the aqueous solution obtained by performing dialysis membrane purification was 1.8% by mass.

The aqueous solution obtained by performing dialysis membrane purification was analyzed. The resulting fluoropolymer had a weight average molecular weight (Mw) of $1.0 \times 10^4$ and a number average molecular weight (Mn) of $0.7 \times 10^4$. The content of the dimer and the trimer having a repeating unit derived from sodium 1,1,2,2-tetrafluoro-2-((1,2,2-trifluorovinyl)oxy)ethane-1-sulfonate in the aqueous solution obtained by performing dialysis membrane purification was 0.1% by mass or less based on the fluoropolymer. The content of the fraction having a molecular weight of 3,000 or less in the aqueous solution obtained by performing dialysis membrane purification was 0.5% or less. When this aqueous solution was analyzed by DLS, it was not possible to measure the particle size.

<Synthesis Example 6>

A reactor was charged with 6.8 g of sodium 1,1,2,2-tetrafluoro-2-((1,2,2-trifluorovinyl)oxy)ethane-1-sulfonate, 34 g of water, and ammonium persulfate (APS) in an amount corresponding to 1.5 mol% based on the amount of sodium 1,1,2,2-tetrafluoro-2-((1,2,2-trifluorovinyl)oxy)ethane-1-sulfonate, after $N_2$ purge and degassing, 3.2 g of VdF was introduced, and the mixture was stirred at 60°C for 2 hours in a hermetically sealed condition. The internal pressure of the reactor increased to 0.30 MPaG after heating, and decreased to 0.19 MPaG as the reaction progressed.

The resulting fluoropolymer-containing aqueous solution was subjected to filtration by being brought into contact with a dialysis membrane (a molecular weight cut-off of 3,500 Da, made of cellulose) at room temperature, and thus an aqueous fluoropolymer solution was obtained. The concentration of the aqueous solution obtained by performing dialysis membrane purification was 2.65% by mass.

When the aqueous solution obtained by performing dialysis was analyzed by NMR to examine the polymer composition, the molar ratio of the polymerization unit derived from $CF_2=CFOCF_2CF_2SO_3Na$ to the polymerization unit derived from VdF contained in the polymer was 1.0/1.0 (mass ratio 82/18). The alternating ratio of the polymerization unit derived from $CF_2=CFOCF_2CF_2SO_3Na$ and the polymerization unit derived from VdF in the fluoropolymer was 76% or more.

The resulting fluoropolymer had a weight average molecular weight (Mw) of $15.3 \times 10^4$ and a number average molecular weight (Mn) of $7.2 \times 10^4$. The content of the dimer and the trimer of the polymerization unit derived from $CF_2=CFOCF_2CF_2SO_3Na$ in the aqueous solution obtained by performing dialysis was 0.1% by mass or less based on the fluoropolymer. The content of the dimer and the trimer of the polymerization unit derived from $CF_2=CFOCF_2CF_2SO_3Na$ and the polymerization unit derived from VdF was 0.1% by mass or less based on the fluoropolymer. The content of the fraction having a molecular weight of 3,000 or less in the aqueous solution obtained by performing dialysis was 0.1% by mass or less.

<Synthesis Example 7>

A reactor was charged with 2.42 g of $CF_2=CFOCF_2CF_2COOH$, 3.16 g of $CF_2=CFOCF_2CF_2SO_3Na$, 11 g of water, and ammonium persulfate (APS) in an amount corresponding to 1.5 mol% based on the total amount of $CF_2=CFOCF_2CF_2COOH$ and $CF_2=CFOCF_2CF_2SO_3Na$, and the mixture was stirred at 40°C for 21 hours and also at room temperature for 91 hours in a $N_2$ flow. The oxygen concentration in the reactor varied between 66 volume ppm and 98 volume ppm.

The resulting fluoropolymer-containing aqueous solution was added to a dialysis membrane (a molecular weight cut-off of 3,500 Da, made of cellulose), and dialyzed at room temperature by being brought into contact with water, and thus an aqueous fluoropolymer solution was obtained. The concentration of the aqueous solution obtained by performing dialysis membrane purification was 1.1% by mass.

When the aqueous solution obtained by performing dialysis was analyzed by NMR to examine the polymer composition, the molar ratio of the polymerization unit derived from $CF_2=CFOCF_2CF_2COOH$ to the polymerization unit derived from $CF_2=CFOCF_2CF_2SO_3Na$ contained in the polymer was 1.0/0.8 (mass ratio 50/50) .

The resulting fluoropolymer had a weight average molecular weight (Mw) of $2.0 \times 10^4$ and a number average molecular weight (Mn) of $1.3 \times 10^4$. The content of the dimer and the trimer of the polymerization unit derived from $CF_2=CFOCF_2CF_2SO_3Na$ in the aqueous solution obtained by performing dialysis was 0.1% by mass or less based on the fluoropolymer. The content of the dimer and the trimer of the polymerization unit derived from $CF_2=CFOCF_2CF_2COOH$ and the polymerization unit derived from $CF_2=CFOCF_2CF_2SO_3Na$ was 0.1% by mass or less based on the fluoropolymer. The content of the fraction having a molecular weight of 3,000 or less in the aqueous solution obtained by performing dialysis was 0.1% by mass or less.

<Synthesis Example 8>

A reactor was charged with 1 g of $CF_2$=$CFOCF_2CF_2SO_3Na$, 2 g of pure water, and APS in an amount corresponding to 24 mol% based on the amount of $CF_2$=$CFOCF_2CF_2SO_3Na$, and the mixture was stirred at 40°C for 72 hours in a $N_2$ flow. The oxygen concentration in the reactor varied between 40 volume ppm and 95 volume ppm.

The resulting fluoropolymer-containing aqueous solution was added to a dialysis membrane (a molecular weight cut-off of 3,500 Da, made of cellulose), and dialyzed at room temperature by being brought into contact with water, and thus an aqueous fluoropolymer solution was obtained. The concentration of the aqueous solution obtained by performing dialysis membrane purification was 2.1% by mass.

The resulting fluoropolymer had a weight average molecular weight (Mw) of $0.8 \times 10^4$ and a number average molecular weight (Mn) of $0.6 \times 10^4$. The content of the dimer and the trimer of the polymerization unit derived from $CF_2$=$CFOCF_2CF_2SO_3Na$ in the aqueous solution obtained by performing dialysis was 0.1% by mass or less based on the fluoropolymer. The content of the fraction having a molecular weight of 3,000 or less in the aqueous solution obtained by performing dialysis was 0.1% by mass or less.

<Synthesis Example 9>

A reactor was charged with 1 g of $CF_2$=$CFOCF_2CF_2SO_3Na$, 2 g of pure water, and APS in an amount corresponding to 2 mol% based on the amount of $CCF_2$=$CFOCF_2CF_2SO_3Na$, and the mixture was stirred at 52°C for 72 hours in a $N_2$ flow. The oxygen concentration in the reactor varied between 35 volume ppm and 95 volume ppm.

The resulting fluoropolymer-containing aqueous solution was added to a dialysis membrane (a molecular weight cut-off of 3,500 Da, made of cellulose), and dialyzed at room temperature by being brought into contact with water, and thus an aqueous fluoropolymer solution was obtained. The concentration of the aqueous solution obtained by performing dialysis membrane purification was 2.1% by mass.

The resulting fluoropolymer had a weight average molecular weight (Mw) of $0.7 \times 10^4$ and a number average molecular weight (Mn) of $0.6 \times 10^4$. The content of the dimer and the trimer of the polymerization unit derived from $CF_2$=$CFOCF_2CF_2SO_3Na$ in the aqueous solution obtained by performing dialysis was 0.1% by mass or less based on the fluoropolymer. The content of the fraction having a molecular weight of 3,000 or less in the aqueous solution obtained by performing dialysis was 0.1% by mass or less.

<Synthesis Example 10>

A reactor was charged with 6.3 g of sodium 1,1,2,2-tetrafluoro-2-((1,2,2-trifluorovinyl)oxy)ethane-1-sulfonate, 34 g of water, and ammonium persulfate (APS) in an amount corresponding to 5.0 mol% based on the amount of sodium 1,1,2,2-tetrafluoro-2-((1,2,2-trifluorovinyl)oxy)ethane-1-sulfonate, after $N_2$ purge and degassing, 3.3 g of VdF was introduced, and the mixture was stirred at 78°C for 4 hours in a hermetically sealed condition. The internal pressure of the reactor increased to 0.38 MPaG after heating, and decreased to 0.34 MPaG as the reaction progressed.

The resulting fluoropolymer-containing aqueous solution was subjected to filtration by being brought into contact with a dialysis membrane (a molecular weight cut-off of 3,500 Da, made of cellulose) at room temperature, and thus an aqueous fluoropolymer solution was obtained. The concentration of the aqueous solution obtained by performing dialysis membrane purification was 1.3% by mass.

When the aqueous solution obtained by performing dialysis was analyzed by NMR to examine the polymer composition, the molar ratio of the polymerization unit derived from sodium 1,1,2,2-tetrafluoro-2-((1,2,2-trifluorovinyl)oxy)ethane-1-sulfonate to the polymerization unit derived from VdF contained in the polymer was 1.0/0.5 (mass ratio 90/10). The alternating ratio of the polymerization unit derived from sodium 1,1,2,2-tetrafluoro-2-((1,2,2-trifluorovinyl)oxy)ethane-1-sulfonate and the polymerization unit derived from VdF in the fluoropolymer was 41% or more.

The resulting fluoropolymer had a weight average molecular weight (Mw) of $1.0 \times 10^4$ and a number average molecular weight (Mn) of $0.8 \times 10^4$. The content of the dimer and the trimer having a polymerization unit derived from sodium 1,1,2,2-tetrafluoro-2-((1,2,2-trifluorovinyl)oxy)ethane-1-sulfonate in the aqueous solution obtained by performing dialysis was 0.1% by mass or less based on the fluoropolymer. The content of the dimer and the trimer composed of the polymerization unit derived from sodium 1,1,2,2-tetrafluoro-2-((1,2,2-trifluorovinyl)oxy)ethane-1-sulfonate and the polymerization unit derived from VdF was 0.1% by mass or less based on the fluoropolymer. The content of the fraction having a molecular weight of 3,000 or less in the aqueous solution obtained by performing dialysis was 0.1% by mass or less.

<Synthesis Example 11>

A reactor was charged with 6.3 g of sodium 1,1,2,2-tetrafluoro-2-((1,2,2-trifluorovinyl)oxy)ethane-1-sulfonate,

34 g of water, and ammonium persulfate (APS) in an amount corresponding to 10 mol% based on the amount of sodium 1,1,2,2-tetrafluoro-2-((1,2,2-trifluorovinyl)oxy)ethane-1-sulfonate, after $N_2$ purge and degassing, 5.0 g of VdF was introduced, and the mixture was stirred at 58°C for 1 hour in a hermetically sealed condition. The internal pressure of the reactor increased to 0.55 MPaG after heating, and decreased to 0.40 MPaG as the reaction progressed.

The resulting fluoropolymer-containing aqueous solution was subjected to filtration by being brought into contact with a dialysis membrane (a molecular weight cut-off of 3,500 Da, made of cellulose) at room temperature, and thus an aqueous fluoropolymer solution was obtained. The concentration of the aqueous solution obtained by performing dialysis membrane purification was 2.9% by mass.

When the aqueous solution obtained by performing dialysis was analyzed by NMR to examine the polymer composition, the molar ratio of the polymerization unit derived from sodium 1,1,2,2-tetrafluoro-2-((1,2,2-trifluorovinyl)oxy)ethane-1-sulfonate to the polymerization unit derived from VdF contained in the polymer was 1.0/1.1 (mass ratio 81/19). The alternating ratio of the polymerization unit derived from sodium 1,1,2,2-tetrafluoro-2-((1,2,2-trifluorovinyl)oxy)ethane-1-sulfonate and the polymerization unit derived from VdF in the fluoropolymer was 65% or more.

The resulting fluoropolymer had a weight average molecular weight (Mw) of $13.6 \times 10^4$ and a number average molecular weight (Mn) of $7.6 \times 10^4$. The content of the dimer and the trimer having a polymerization unit derived from sodium 1,1,2,2-tetrafluoro-2-((1,2,2-trifluorovinyl)oxy)ethane-1-sulfonate in the aqueous solution obtained by performing dialysis was 0.1% by mass or less based on the fluoropolymer. The content of the dimer and the trimer composed of the polymerization unit derived from sodium 1,1,2,2-tetrafluoro-2-((1,2,2-trifluorovinyl)oxy)ethane-1-sulfonate and the polymerization unit derived from VdF was 0.1% by mass or less based on the fluoropolymer. The content of the fraction having a molecular weight of 3,000 or less in the aqueous solution obtained by performing dialysis was 0.1% by mass or less.

<Experimental Example 1 (Production of coating film)>

In order to form a film having a thickness of 1 μm on a substrate, the concentration of the aqueous solution obtained by performing ultrafiltration in Synthesis Example 1 (the weight average molecular weight (Mw) of the fluoropolymer was $1.0 \times 10^4$) was regulated to prepare a polymer solution having a fluoropolymer concentration of 10% by mass. The polymer solution was stirred with a stirrer for 24 hours and subjected to filtration through a disposable syringe filter having a pore size of 0.2 μm to give a spin coating solution.

Using the resulting spin coating solution and a commercially available programmable spin coater, a silicon wafer substrate was spin-coated under the following conditions. The spin coating solution was applied to the substrate while rotating the substrate at a rotational speed of 200 rpm for 10 seconds, and then the spin coating solution was applied to the substrate while rotating the substrate at 500 rpm for 50 seconds. Immediately after forming the film, the film was dried for 8 hours in a blower type electric furnace at a temperature of 50°C, and the substrate on which the coating film was formed was taken out. The film thickness of the coating film was measured at 5 points with a digital film thickness gauge. The average film thickness of the coating film was 0.95 μm, and it was thus possible to uniformly form a coating film having the intended film thickness.

<Comparative Example 1 (Production of coating film)>

The same operation as Experimental Example 1 was performed except that a homopolymer of $CH_2=CF(CF_2OCFCF_3COOH)$ (weight average molecular weight (Mw) of $40\times10^4$) was used in place of the aqueous solution obtained by performing ultrafiltration in Synthesis Example 1. It was not possible to obtain a uniform coating film, and there was large unevenness in film thickness.

<Comparative Example 2 (Production of coating film)>

The same operation as Experimental Example 1 was performed except that a copolymer of sodium 1,1,2,2-tetrafluoro-2-((1,2,2-trifluorovinyl)oxy)ethane-1-sulfonate and tetrafluoroethylene (mass ratio of monomers 37/63 (% by mass)) was used in place of the aqueous solution obtained by performing ultrafiltration in Synthesis Example 1. It was not possible to prepare a 10% by mass aqueous solution, precipitates were observed, and it was not possible to form a coating film.

## Claims

1. A fluoropolymer of a monomer (I) represented by the general formula (I), wherein
a content of a polymerization unit (I) derived from the monomer (I) is 50% by mass or more based on all polymerization

units constituting the fluoropolymer:

General formula (I): $CX_2=CX-O-Rf-SO_3M$

wherein X is independently F or $CF_3$; Rf is a fluorine-containing alkylene group having 1 to 40 carbon atoms or a fluorine-containing alkylene group having 2 to 100 carbon atoms and having an ether bond or a keto group; and M is -H, a metal atom, $-NR^7_4$, imidazolium optionally having a substituent, pyridinium optionally having a substituent, or phosphonium optionally having a substituent, wherein $R^7$ is H or an organic group.

**2.** The fluoropolymer according to claim 1, having a weight average molecular weight (Mw) of $0.6 \times 10^4$ or more.

**3.** The fluoropolymer according to claim 1 or 2, having a molecular weight distribution (Mw/Mn) of 3.0 or less.

**4.** The fluoropolymer according to any one of claims 1 to 3, wherein each X is F.

**5.** The fluoropolymer according to any one of claims 1 to 4, wherein Rf is a fluorine-containing alkylene group having 1 to 5 carbon atoms or a fluorine-containing alkylene group having 2 to 5 carbon atoms and having an ether bond or a keto group.

**6.** The fluoropolymer according to any one of claims 1 to 5, which is a copolymer of the monomer (I) and a monomer represented by the general formula $CFR=CR_2$, wherein R is independently H, F, or a perfluoroalkyl group having 1 to 4 carbon atoms.

**7.** The fluoropolymer according to claim 6, wherein a content of the polymerization unit (I) derived from the monomer (I) is 50 to 94% by mass based on all polymerization units constituting the fluoropolymer, and a content of a polymerization unit (M) derived from the monomer represented by the general formula $CFR=CR_2$, wherein R is independently H, F, or a perfluoroalkyl group having 1 to 4 carbon atoms, is 6 to 50% by mass based on all polymerization units constituting the fluoropolymer.

**8.** The fluoropolymer according to claim 7, wherein an alternating ratio of the polymerization unit (I) and the polymerization unit (M) is 40% or more.

**9.** The fluoropolymer according to any one of claims 1 to 6, wherein a content of the polymerization unit (I) is 99% by mass or more based on all polymerization units constituting the fluoropolymer.

**10.** The fluoropolymer according to any one of claims 1 to 5, which consists of the polymerization unit (I).

**11.** The fluoropolymer according to any one of claims 1 to 10, which is substantially free of a dimer and a trimer of the monomer (I).

**12.** The fluoropolymer according to any one of claims 1 to 11, wherein a content of a fraction having a molecular weight of 3,000 or less is 0.5% or less based on the fluoropolymer.

**13.** An aqueous solution comprising the fluoropolymer according to any one of claims 1 to 12.

**14.** The aqueous solution according to claim 13, wherein a content of the fluoropolymer is 2% by mass or more based on the aqueous solution.

**15.** A coating composition comprising the fluoropolymer according to any one of claims 1 to 12 or the aqueous solution according to claim 13 or 14.

**INTERNATIONAL SEARCH REPORT**

International application No.
**PCT/JP2022/020585**

**A. CLASSIFICATION OF SUBJECT MATTER**

***C08F 16/24***(2006.01)i; ***C08F 14/18***(2006.01)i; ***C08F 16/30***(2006.01)i; ***C08F 216/14***(2006.01)i; ***C09D 127/12***(2006.01)i; ***C09D 129/10***(2006.01)i
FI: C08F16/24; C08F216/14; C09D127/12; C09D129/10; C08F14/18; C08F16/30

According to International Patent Classification (IPC) or to both national classification and IPC

**B. FIELDS SEARCHED**

Minimum documentation searched (classification system followed by classification symbols)

C08F16/24; C08F14/18; C08F16/30; C08F216/14; C09D127/12; C09D129/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2002-260705 A (ASAHI GLASS CO., LTD.) 13 September 2002 (2002-09-13) claims 1, 11, 15, paragraph [0075], synthesis example 1 | 1-6, 13-15 |
| Y | | 8, 11, 12 |
| A | | 7, 9, 10 |
| X | JP 41-7949 B1 (E.I. DU PONT DE NEMOURS AND CO.) 26 April 1966 (1966-04-26) claims, page 2, right column, paragraphs 4, 5, reference examples 2, 3 | 1-7, 9, 10, 13-15 |
| Y | | 8, 11, 12 |
| X | JP 3538843 B2 (DAIKIN INDUSTRIES, LTD.) 14 June 2004 (2004-06-14) claims 1, 2, 4, column 8, paragraphs 4-8, column 9, paragraph 4, example 2 | 1-7, 13-15 |
| A | | 8-12 |
| X | WO 2011/034179 A1 (ASAHI KASEI E-MATERIALS CORP.) 24 March 2011 (2011-03-24) claims 1, 3, 4, 9, 11, 12, paragraphs [0058], [0062], [0065], [0066], [0069], [0072], [0132], example 1 | 1-7, 9, 10, 13-15 |
| Y | | 8, 11, 12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/020585**

**C. DOCUMENTS CONSIDERED TO BE RELEVANT**

| Category* | Citation of document, with indication, where appropriate, of the relevant passages | Relevant to claim No. |
|---|---|---|
| Y<br><br>A | JP 2015-170807 A (DAIKIN INDUSTRIES, LTD.) 28 September 2015 (2015-09-28)<br>claims 1, 2, paragraph [0067] | 8<br><br>1-7, 9-15 |
| Y<br><br>A | WO 2020/218619 A1 (DAIKIN INDUSTRIES, LTD.) 29 October 2020 (2020-10-29)<br>claims 1, 39, 47, paragraph [0326] | 11, 12<br><br>1-10, 13-15 |
| A | WO 2020/105650 A1 (DAIKIN INDUSTRIES, LTD.) 28 May 2020 (2020-05-28) | 1-15 |
| A | JP 2006-510720 A (3M INNOVATIVE PROPERTIES CO.) 30 March 2006 (2006-03-30) | 1-15 |

Form PCT/ISA/210 (second sheet) (January 2015)

**INTERNATIONAL SEARCH REPORT**
**Information on patent family members**

International application No.
**PCT/JP2022/020585**

| Patent document cited in search report | Publication date (day/month/year) | Patent family member(s) | Publication date (day/month/year) |
|---|---|---|---|
| JP 2002-260705 A | 13 September 2002 | US 2002/0142207 A1<br>claims 1, 19, 23, paragraph [0062], synthesis example 1<br>EP 1220344 A2 | |
| JP 41-7949 B1 | 26 April 1966 | US 3282875 A<br>claims, column 9, paragraph 3, examples 7, 8 | |
| JP 3538843 B2 | 14 June 2004 | US 6274677 B1<br>claims 1, 2, 4, column 5, paragraphs 3-6, column 6, paragraph 2, example 2<br>EP 1026152 A1<br>CN 1251576 A | |
| WO 2011/034179 A1 | 24 March 2011 | US 2012/0178017 A1<br>claims 1, 3, 4, 9, 11, 12, paragraphs [0071], [0075], [0078], [0079], [0080], [0086], [0157], example 1<br>EP 2479212 A1<br>CN 102498168 A | |
| JP 2015-170807 A | 28 September 2015 | (Family: none) | |
| WO 2020/218619 A1 | 29 October 2020 | CN 113748135 A | |
| WO 2020/105650 A1 | 28 May 2020 | EP 3885406 A1<br>CN 113039241 A | |
| JP 2006-510720 A | 30 March 2006 | WO 2004/060857 A1<br>EP 1572633 A1<br>KR 10-2005-0085696 A<br>CN 1726186 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10284128 A
- JP 57092025 A
- JP 2014504293 W
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A